# EUROPEAN PATENT SPECIFICATION

(11) **EP 3 028 830 B1**
(45) Date of publication and mention of the grant of the patent: **22.11.2017**
(21) Application number: 14195970.0
(22) Date of filing: 02.12.2014
(51) Int. Cl.: B29B 7/00, B29B 7/90, C09C 1/02, C08L 23/06, D01F 1/10, D01F 6/44, D01F 6/46, D01F 6/88, B29B 7/10, B29B 7/28, B29B 7/38, B29B 9/08

(54) **Process for producing a compacted material, material so produced and its use**
Verfahren zur Herstellung eines kompaktierten Materials, danach hergestelltes Material sowie dessen Verwendung
Procédé de production d'un matériau compacté, matériau ainsi produit et son utilisation

(43) Date of publication of application: 08.06.2016
(73) Proprietor: Omya International AG, 4665 Oftringen (CH)
(72) Inventor: Brunner, Martin, 4323 Wallbach (CH); Knerr, Michael, 4665 Oftringen (CH); Hirsiger, Christoph, 3425 Koppigen (CH); Riesen, Roland, 4629 Fulenbach (CH); Schirosi, Giuseppe, 5603 Staufen (CH); Tinkl, Michael, 5073 Gipf-Oberfrick (CH); Schulz, Karsten Udo, 50858 Köln (DE); Muratore, Antonio, 54100 Massa (IT)
(74) Representative: Müller-Dyck, Martina

(56) References cited:
- EP-A1- 2 662 419
- WO-A1-95/17441
- WO-A1-99/34973

## Description

The present invention relates to the field of processing polymers, and in particular to a process for manufacturing a compacted material, which is suitable for the use in polymer compositions without a compounding step, as well as a compacted material obtained by this process and its use in polymer compositions.

Compounding consists of preparing plastic formulations, by mixing and/or blending polymers and additives in a molten state. There are different critical criteria to achieve a homogeneous blend of the different raw materials. Dispersive and the distributive mixing as well as heat are important factors. Co-kneaders and twin screws (co- and counter rotating) as well as internal mixers are the most common used compounders in the plastic industries.

For decades, the thermoplastic processing industry uses additives for preparing modified thermoplastic resin compositions, which are to a great extent introduced into the polymer resins via compounding technologies requiring the formation of intermediate products named masterbatches, concentrates or compounds.

For example, WO 95/17441 A1 discloses a method of preparing a thermoplastic resin end-product comprising the preparation of thermoplastic granules for blending them with the thermoplastic resin.

In WO 01/58988 A1, a method for preparing masterbatches or concentrates of mineral fillers to achieve highly filled thermoplastic materials is described.

However, according to these documents, it is not possible to obtain a polymeric end-product having the primary powder compounds well dispersed in a conventional single screw extruder. Rather, it is required to produce an intermediate product like a masterbatch, or concentrate, i.e. it is not possible to disperse fine primary powders on conventional single screw machines without an intermediate compounding step.

In this respect, further documents such as WO 2007/066362 A1 describe a mixing process and device with only one material inlet, while others like EP 1 156 918 A1, WO 2005/108045 A2 or WO 2005/065067 A2 relate to extruders or element mixers.

WO 2010/150182 A1 discloses a process for manufacturing a surface-treated compacted material, which is suitable for use in thermoplastic resin compositions. The process inter alia comprises the step of mixing a primary powder material with a molten surface treatment polymer, and the primary powder material may be selected from organic or inorganic powders.

A problem that may be encountered with the use of inorganic powders such as inorganic mineral fillers is the presence of volatiles associated with the mineral fillers. Such volatiles may evolve at temperatures reached during the application of the fillers and may lead to the degradation of the quality of the final mineral-comprising polymer product during the processing of such mineral filler-comprising products. Moreover, such associated volatiles may lead to a reduction in the tensile and tear strength of a polymer product, and may degrade its visible aspects, in particular its visible uniformity. Volatiles can also generate excessive foaming of the mineral filled polymer melt during a step of compounding, causing unwanted product build-up at the vacuum extraction and hence, forcing a reduced output rate.

Said volatiles may, for example, be inherently associated with the mineral filler ("inherent volatiles"), and are especially associated water, and/or may be introduced during the treatment of the mineral filler ("added volatiles"), for example, to render the mineral filler more dispersible within a plastic medium. Furthermore, volatiles may be generated by the reaction of inherent organic materials and/or added organic materials with the mineral filler, whereas such reactions may especially be induced or enhanced by the temperatures reached during the introduction and/or processing of the filled polymeric material, for example, during the extrusion or compounding process. Said volatiles may also be generated by the degradation of inherent organic materials and/or added organic materials, forming CO₂, water and possibly low molecular mass fractions of these organic materials. Such a degradation may especially be induced or enhanced by the temperatures reached during the introduction and/or processing of the polymeric material comprising the treated mineral filler, such as during the extrusion or compounding process.

One obvious means to increase the volatile onset temperature and to limit the quantity of volatiles associated with a powder material, e.g. a mineral filler, is to avoid or limit the use of certain common filler treatment additives.

However, often, as in the case when a mineral filler is applied in a plastic application, such additives are needed to ensure other functions. For example, in order to obtain uniform distribution barrier and vapour transmission properties throughout a polymer product such as a breathable film, it is required to have the filler as equally distributed throughout the film as possible. Therefore, usually additives are introduced to provide the mineral filler with a hydrophobic coating and to improve the dispersability of the mineral filler in the polymer product precursor material as well as possibly to improve the processability of this precursor material and/or properties of the final application products. An elimination of such additives would unacceptably compromise the resulting film quality.

In the art, several attempts have been made to improve the applicability of powder materials, and especially calcium carbonate-comprising mineral filler materials, e.g. by treating such mineral filler materials with aliphatic carboxylic acids, and aliphatic carboxylic acid salts, which in some cases may also be referred to as fatty acids and fatty acid salts. For instance, WO 00/20336 relates to an ultrafine natural calcium carbonate, which may optionally be treated with one or several fatty acids or one or several salts or mixtures thereof, and which is used as a rheology regulator for polymer compositions. WO 2014/060286 A1 discloses a process for preparing a surface-treated filler material product with succinic anhydrides. A process for preparing a surface reactive white mineral material comprising on at least a part of the surface of the material a phosphoric ester blend is disclosed in WO 2014/128087 A1. Furthermore, reference is made to the applicant's unpublished European patent application no. 14 181 082.0.

In view of the foregoing, improving the processes of manufacturing additives from powder materials, which are suitable to be introduced in polymer compositions without the need of any intermediate steps remains of interest to the skilled man.

Accordingly, it is a first object of the present invention to provide a process for manufacturing materials suitable for being incorporated into polymers such as thermoplastic polymer compositions by a continuous or discontinuous process, wherein the powder material to be introduced into the polymer can be well dispersed in a conventional single screw extruder.

Another object of the present invention is the provision of a powder material for such a process, which shows good dispersing properties. It would also be desirable to provide a powder material having a high temperature resistance, and thus, allowing higher processing temperatures during the production of polymer products. Furthermore, it would be desirable to provide a powder material which exhibits a low moisture absorption, and therefore, reduces or avoids the problem encountered with associated volatiles, and especially water. It would also be desirable to provide a powder material for the above-mentioned process, which can be tailored regarding its surface properties, for example, its hydrophobicity. Furthermore, the risk of foaming during polymer production or leaching of a possible surface coating, especially when in contact with human skin, should be minimized. It would be also desirable to provide a powder material with increased filler load and improved processing properties.

The foregoing objects and other objects are solved by the subject-matter as defined herein in the independent claims.

According to one aspect of the present invention, a process for producing a compacted material according to claim 1 is provided, comprising the following steps:
a) providing at least one powder material,
b) providing a polymer binder,
c) simultaneously or subsequently feeding the at least one powder material of step a) and the polymer binder of step b) into a high speed mixer unit,
d) mixing the at least one powder material of step a) and the polymer binder of step b) in the high speed mixer unit until formation of a compacted material, and
e) reducing the temperature of the compacted material obtained from step d) below the melting point or glass transition temperature of the polymer binder,
wherein the at least one powder material comprises a surface-treated filler material product comprising a calcium carbonate-comprising filler material and a treatment layer on at least a part of the surface of the calcium carbonate-comprising filler material,
wherein the treatment layer comprises
i) at least one mono-substituted succinic anhydride and/or at least one mono-substituted succinic acid and/or salty reaction products thereof, and/or
ii) a phosphoric acid ester or blend of one or more phosphoric acid mono-ester and salty reaction products thereof and/or one or more phosphoric acid di-ester and salty reaction products thereof.

According to another aspect of the present invention, according to claim 10, a compacted material obtained by a process according to the present invention is provided.

According to still another aspect of the present invention, according to claim 11, a use of a compacted material according to the present invention as additive in polymer compositions is provided.

According to still another aspect not forming part of the invention, a process for producing a polymer composition is provided, wherein a compacted material according to the present invention is added to at least one polymer, said at least one polymer preferably being selected from at least one thermoplastic polymer.

According to still another aspect not forming part of the invention, a polymer composition comprising a compacted material according to the present invention is provided, said polymer composition preferably being a thermoplastic polymer composition.

According to still another aspect not forming part of the invention, a use of a polymer composition in a process for producing a polymer product is provided, the process preferably being selected from melt processing techniques, and more preferably being selected from profile extrusion, cable extrusion, film extrusion, moulding, fibre spinning, co-kneading, or pultrusion.

According to still another aspect not forming part of the invention, a polymer product comprising a compacted material according to the present invention and/or a polymer composition is provided, wherein the product is a fibre, preferably a carpet fibre, a filament, a thread, a woven material, a nonwoven material, a film, preferably a blown-film or breathable film, a profile, a cable, or a moulded product.

According to still another aspect not forming part of the invention, an article comprising a polymer product is provided, wherein the article is selected from the group consisting of healthcare products, geotextile products, agriculture products, horticulture products, clothing, footwear products, baggage products, household products, industrial products, packaging products, building products, upholstery products, industrial apparel, medical products, home furnishings, protective products, cosmetic products, hygiene products, filtration materials, and construction products.

Advantageous embodiments of the present invention are defined herein and also in the corresponding sub-claims.

According to one embodiment the calcium carbonate-comprising filler material is natural ground calcium carbonate, precipitated calcium carbonate, surface-modified calcium carbonate, or a mixture thereof, and preferably natural ground calcium carbonate. According to another embodiment the calcium carbonate-comprising filler material has a weight median particle size *d*₅₀ from 0.05 to 10 µm, preferably from 0.1 to 7 µm, more preferably from 0.25 to 5 µm, and most preferably from 0.5 to 4 µm.

According to one embodiment the at least one mono-substituted succinic anhydride consists of succinic anhydride mono-substituted with a group selected from a linear, branched, aliphatic and cyclic group having a total amount of carbon atoms from C2 to C30, preferably from C3 to C25, and most preferably from C4 to C20 in the substituent. According to another embodiment, (I) the one or more phosphoric acid mono-ester consists of an o-phosphoric acid molecule mono-esterified with one alcohol molecule selected from unsaturated or saturated, branched or linear, aliphatic or aromatic alcohols having a total amount of carbon atoms from C6 to C30, preferably from C8 to C22, more preferably from C8 to C20, and most preferably from C8 to C18 in the alcohol substituent, and/or (II) the one or more phosphoric acid di-ester consists of an o-phosphoric acid molecule di-esterified with two alcohol molecules selected from the same or different, unsaturated or saturated, branched or linear, aliphatic or aromatic fatty alcohols having a total amount of carbon atoms from C6 to C30, preferably from C8 to C22, more preferably from C8 to C20, and most preferably from C8 to C18 in the alcohol substituent.

According to one embodiment the surface-treated filler material product comprises the treatment layer in an amount of at least 0.1 wt.-%, based on the total dry weight of the at least one calcium carbonate-comprising filler material, preferably in an amount from 0.1 to 3 wt.-%. According to another embodiment the at least one powder material is added in an amount from 50 to 99 wt.-%, based on the total weight of the compacted material, preferably from 60 to 98 wt.-%, more preferably from 80 to 92 wt.-%, and most preferably from 87 to 90 wt.-%.

According to one embodiment the polymer binder has a rotational viscosity from 100 to 400 000 mPa·s, preferably from 1 000 to 100 000 mPa·s, and more preferably from 5 000 to 50 000 mPa·s, at 190°C. According to another embodiment the polymer binder is selected from the group consisting of polyolefins, ethylene copolymers, e.g. ethylene-1-octene copolymers, metallocene based polypropylenes, polypropylene homo- or co-polymers, preferably amorphous polypropylene homopolymers, and combinations thereof.

According to one embodiment the at least one thermoplastic polymer is selected from the group consisting of homopolymers and/or copolymers of polyolefins, polyamides, polystyrenes, polyacrylates, polyvinyls, polyurethanes, halogen-containing polymers, polyesters, polycarbonates, and mixtures thereof.

It should be understood that for the purposes of the present invention, the following terms have the following meanings:
For the purpose of the present invention, a "compacted material" is a bulk material consisting of a conglomerate of a number of single particles forming a material with a weight median particle size *d*₅₀ ranging from 10 µm to 10 mm, measured by sieve analysis using the Retsch AS 200 sieve tower according to ISO 3310 standard.

As used herein the term "polymer" generally includes homopolymers and co-polymers such as, for example, block, graft, random and alternating copolymers, as well as blends and modifications thereof. The polymer can be an amorphous polymer, a crystalline polymer, or a semi-crystalline polymer, i.e. a polymer comprising crystalline and amorphous fractions. The degree of crystallinity is specified in percent and can be determined by differential scanning calorimetry (DSC). An amorphous polymer may be characterized by its glass transition temperature and a crystalline polymer may be characterized by its melting point. A semi-crystalline polymer may be characterized by its glass transition temperature and/or its melting point.

The term "glass transition temperature" in the meaning of the present invention refers to the temperature at which the glass transition occurs, which is a reversible transition in amorphous materials (or in amorphous regions within semi-crystalline materials) from a hard and relatively brittle state into a molten or rubber-like state. The glass-transition temperature is always lower than the melting point of the crystalline state of the material, if one exists. The term "melting point" in the meaning of the present invention refers to the temperature at which a solid changes state from solid to liquid at atmospheric pressure. At the melting point the solid and liquid phase exist in equilibrium. Glass-transition temperature and melting point are determined by ISO 11357 with a heating rate of 10°C/min.

A "film" is a sheet or layer of material having a median thickness which is small compared to its length and width. For example, the term "film" may refer to a sheet or layer of material having a median thickness of less than 200 µm, but more than 1 µm.

As used herein, the term "blown-film" refers to a film obtained by blown film extrusion. Said process typically involves the steps of extruding a tube of molten polymer through a die and inflating to several times its initial diameter to form a thin film bubble, which can be collapsed to form a lay-flat film.

The term "breathable film" refers to a polymer film that allows the passage of gases and moisture vapour, for example, due to the presence of micropores. The "breathability" of a breathable film can be measured by its water vapour transmission rate (WVTR), which is specified in g/(m²·day). For example, a polymer film may considered as being "breathable" if it has a WVTR of at least 1000 g/(m²·day). The WVTR may be determined with a Lyssy L80-5000 measuring device according to ASTM E398.

According to the present invention, the expression "high speed" concerning the high speed mixer unit means circumferential speeds in the range from 5 to 80 m/s, preferably 10 to 50 m/s.

For the purpose of the present invention, the term "calcium carbonate-comprising filler material" refers to a material that comprises at least 80 wt.-% calcium carbonate, based on the total dry weight of the calcium carbonate-comprising filler material.

"Natural ground calcium carbonate" (GCC) in the meaning of the present invention is a calcium carbonate obtained from natural sources, such as limestone, marble, dolomite or chalk, and processed through a wet and/or dry treatment such as grinding, screening and/or fractionation, for example by a cyclone or classifier.

"Surface-modified calcium carbonate" in the meaning of the present invention may feature a surface-reaction product of natural ground or precipitated calcium carbonate, i.e. "surface-reacted calcium carbonate". A "surface-reacted calcium carbonate" is a material comprising calcium carbonate and insoluble, preferably at least partially crystalline, calcium salts of anions of acids on the surface. Preferably, the insoluble calcium salt extends from the surface of at least a part of the calcium carbonate. The calcium ions forming said at least partially crystalline calcium salt of said anion originate largely from the starting calcium carbonate material. Surface-modified calcium carbonates are described, for example, in US 2012/0031576 A1, WO 2009/074492 A1, EP 2 264 109 A1, EP 2 070 991 A1, EP 2 264 108 A1, WO 00/39222 A1, WO 2004/083316 A1 or WO 2005/121257 A2.

The term "surface-treated filler material product" in the meaning of the present invention refers to a calcium carbonate-comprising filler material which has been contacted with a surface treatment agent such as to obtain a coating layer on at least a part of the surface of the calcium carbonate-comprising filler material.

The term "succinic anhydride", also called dihydro-2,5-furandione, succinic acid anhydride or succinyl oxide, has the molecular formula C₄H₄O₃ and is the acid anhydride of succinic acid.

The term "mono-substituted succinic anhydride" in the meaning of the present invention refers to a succinic anhydride wherein a hydrogen atom is substituted by another substituent.

The term "mono-substituted succinic acid" in the meaning of the present invention refers to a succinic acid wherein a hydrogen atom is substituted by another substituent.

The term "salty reaction products of at least one mono-substituted succinic anhydride and/or at least one mono-substituted succinic acid" in the meaning of the present invention refers to products obtained by contacting a calcium carbonate-comprising filler material with one or more mono-substituted succinic anhydride(s). Said salty reaction products are formed between the mono-substituted succinic acid which is formed from the applied mono-substituted succinic anhydride and reactive molecules located at the surface of the calcium carbonate-comprising filler material. Alternatively, said salty reaction products are formed between the mono-substituted succinic acid, which may optionally be present with the at least one mono-substituted succinic anhydride, and reactive molecules located at the surface of the calcium carbonate-comprising filler material.

The term "phosphoric acid mono-ester" in the meaning of the present invention refers to an o-phosphoric acid molecule mono-esterified with one alcohol molecule selected from unsaturated or saturated, branched or linear, aliphatic or aromatic alcohols having a total amount of carbon atoms from C6 to C30, preferably from C8 to C22, more preferably from C8 to C20, and most preferably from C8 to C18 in the alcohol substituent.

The term "phosphoric acid di-ester" in the meaning of the present invention refers to an o-phosphoric acid molecule di-esterified with two alcohol molecules selected from the same or different, unsaturated or saturated, branched or linear, aliphatic or aromatic alcohols having a total amount of carbon atoms from C6 to C30, preferably from C8 to C22, more preferably from C8 to C20, and most preferably from C8 to C18 in the alcohol substituent.

The term "salty reaction products of a phosphoric acid ester or blend of one or more phosphoric acid mono-esters and/or one or more phosphoric acid di-esters" in the meaning of the present invention refers to products obtained by contacting a calcium carbonate-comprising filler material with one or more phosphoric acid mono-ester and one or more phosphoric acid di-ester and optionally phosphoric acid. Said salty reaction products are formed between the applied one or more phosphoric acid mono-ester and one or more phosphoric acid di-ester and optionally phosphoric acid and reactive molecules located at the surface of the calcium carbonate-comprising filler material.

The term "dry" calcium carbonate-comprising filler material is understood to be a filler material having less than 0.3 % by weight of water relative to the filler material weight. The % water (equal to "residual total moisture content") is determined according to the Coulometric Karl Fischer measurement method, wherein the filler material is heated to 220 °C, and the water content released as vapour and isolated using a stream of nitrogen gas (at 100 ml/min) is determined in a Coulometric Karl Fischer unit.

The term "moisture pick-up susceptibility" in the meaning of the present invention refers to the amount of moisture adsorbed on the surface of the powder material or surface-treated filler material product and can be determined in mg moisture/g of the dry powder material or surface-treated filler material product after exposure to an atmosphere of 10 and 85 % of relative humidity, resp., for 2.5 hours at a temperature of +23 °C (± 2 °C).

For the purpose of the present application, the "volatile onset temperature" is defined as the temperature at which volatiles - including volatiles introduced as a result of common mineral filler material preparation steps including grinding, with or without grinding aid agents, beneficiation, with or without flotation aid or other agents, and other pre-treatment agents not expressly listed above, detected according to the thermogravimetric analysis described hereafter - begin to evolve, as observed on a thermogravimetric (TGA) curve, plotting the mass of remaining sample (y-axis) as a function of temperature (*x*-axis), the preparation and interpretation of such a curve being defined hereafter.

The volatile onset temperature can be measured by a thermogravimetric analytical (TGA) method, which provides information regarding losses of mass and volatile onset temperatures with great accuracy, and is common knowledge; it is, for example, described in "Principles of instrumental analysis"', fifth edition, Skoog, Holler, Nieman, 1998 (first edition 1992) in chapter 31, pages 798 to 800, and in many other commonly known reference works. In the present invention, TGA analysis is performed using a Mettler Toledo TGA 851 based on a sample of 500 +/- 50 mg and scanning temperatures from 25 to 350°C at a rate of 20°C/min under an air flow of 70 ml/min.

The skilled man will be able to determine the "volatile onset temperature" by analysis of the TGA curve as follows: the first derivative of the TGA curve is obtained and the inflection points thereon between 150 and 350°C are identified. Of the inflection points having a tangential slope value of greater than 45° relative to a horizontal line, the one having the lowest associated temperature above 200°C is identified. The temperature value associated with this lowest temperature inflection point of the first derivative curve is the "volatile onset temperature".

The "total volatiles" evolved on the TGA curve is determined using Star SW 11.0 software. Using this software, the curve is first normalised relative to the original sample weight in order to obtain mass losses in % values relative to the original sample. Thereafter, the temperature range of 25 to 350°C is selected and the step horizontal (in German: "Stufe horizontal") option selected in order to obtain the % mass loss over the selected temperature range.

For the purpose of the present application, the "total volatiles" associated with the powder material or surface-treated filler material product and evolved over a temperature range of 25 to 280°C is characterised according to % mass loss of the powder material or surface-treated filler material product sample over a temperature range as read on a thermogravimetric (TGA) curve. The "total volatiles" evolved on the TGA curve is determined using Star® SW 11.0 software. Using this software, the curve is first normalised relative to the original sample weight in order to obtain mass losses in % values relative to the original sample. Thereafter, the temperature range of 25 to 280°C is selected and the step horizontal (in German: "Stufe horizontal") option selected in order to obtain the % mass loss over the selected temperature range.

The term "specific surface area" (in m²/g) of the surface-treated filler material product or calcium carbonate-comprising filler material in the meaning of the present invention is determined using the BET method with nitrogen as adsorbing gas, which is well known to the skilled man (ISO 9277:1995). The total surface area (in m²) of the surface-treated filler material product or calcium carbonate-comprising filler material is then obtained by multiplying the specific surface area by the mass (in g) of the surface-treated filler material product or calcium carbonate-comprising filler material prior to treatment.

Throughout the present document, the "particle size" of a calcium carbonate-comprising filler or other particulate materials is described by its distribution of particle sizes. The value *dₓ* represents the diameter relative to which *x* % by weight of the particles have diameters less than *d*ₓ. This means that the *d*₂₀ value is the particle size at which 20 wt.-% of all particles are smaller, and the *d*₉₈ value is the particle size at which 98 wt.-% of all particles are smaller. The *d*₉₈ value is also designated as "top cut". The *d*₅₀ value is thus the weight median particle size, i.e. 50 wt.-% of all grains are bigger whilst the remaining 50 wt.-% are smaller than this particle size. For the purpose of the present invention the particle size is specified as weight median particle size *d*₅₀ unless indicated otherwise. For determining the weight median particle size *d*₅₀ value or the top cut particle size *d*₉₈ value a Sedigraph 5100 or 5120 device from the company Micromeritics, USA, can be used. The method and the instrument are known to the skilled person and are commonly used to determine grain size of fillers and pigments. The measurement is carried out in an aqueous solution of 0.1 wt.-% Na₄P₂O₇. The samples are dispersed using a high speed stirrer and supersonics.

For present purpose, the term "dtex" refers to the linear mass density of a fibre and is defined as the mass in grams per 10 000 metres.
For the purpose of the present invention, the "solids content" of a liquid composition is a measure of the amount of material remaining after all the solvent or water has been evaporated.

A "suspension" or "slurry" in the meaning of the present invention comprises insoluble solids and water, and optionally further additives, and usually contains large amounts of solids and, thus, is more viscous and can be of higher density than the liquid from which it is formed.

A "powder material" in the meaning of the present invention comprises a filler material, e.g. a mineral material and/or a pigment. Preferably the filler material forms more than 95 wt.-% of the powder material. For the purpose of the present invention, a "mineral material" is a solid substance having a definite inorganic chemical composition and characteristic crystalline and/or amorphous structure.
Where the term "comprising" is used in the present description and claims, it does not exclude other non-specified elements of major or minor functional importance. For the purposes of the present invention, the term "consisting of" is considered to be a preferred embodiment of the term "comprising of'. If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that e.g. an embodiment must be obtained by e.g. the sequence of steps following the term "obtained" even though such a limited understanding is always included by the terms "obtained" or "defined" as a preferred embodiment.

The inventive process for producing a compacted material comprises the steps of (a) providing at least one powder material, (b) providing a polymer binder,
(c) simultaneously or subsequently feeding the at least one powder material of step (a) and the polymer binder of step (b) into a high speed mixer unit, (d) mixing the at least one powder material of step (a) and the polymer binder of step (b) in the high speed mixer unit until formation of a compacted material, and (e) reducing the temperature of the compacted material obtained from step (d) below the melting point or glass transition temperature of the polymer binder. The at least one powder material comprises a surface-treated filler material product comprising a calcium carbonate-comprising filler material and a treatment layer on at least a part of the surface of the calcium carbonate-comprising filler material. The treatment layer comprises (i) at least one mono-substituted succinic anhydride and/or at least one mono-substituted succinic acid and/or salty reaction products thereof, and/or (ii) a phosphoric acid ester or blend of one or more phosphoric acid mono-ester and salty reaction products thereof and/or one or more phosphoric acid di-ester and salty reaction products thereof.

### The at least one powder material

In step a) of the process of the present invention, at least one powder material is provided. The at least one powder material comprises a surface-treated filler material product comprising a calcium carbonate-comprising filler material and a treatment layer on at least a part of the surface of the calcium carbonate-comprising filler material, as defined in claim 1.

The calcium carbonate-comprising filler material in the meaning of the present invention refers to a filler material selected from among natural ground calcium carbonate (GCC), precipitated calcium carbonate (PCC), surface-modified calcium carbonate (MCC), or mixtures thereof. According to a preferred embodiment, the calcium carbonate-comprising filler material is natural ground calcium carbonate (GCC).

GCC is understood to be a naturally occurring form of calcium carbonate, mined from sedimentary rocks such as limestone or chalk, from metamorphic marble rocks, eggshells, or seashells, and processed through a treatment such as grinding, screening and/or fractionating in wet and/or dry form, for example by a cyclone or classifier. In one embodiment of the present invention, the GCC is selected from the group comprising marble, chalk, dolomite, limestone, and mixtures thereof.

"Precipitated calcium carbonate" (PCC) in the meaning of the present invention is a synthesized material, generally obtained by precipitation following reaction of carbon dioxide and lime in an aqueous environment or by precipitation of a calcium and carbonate ion source in water or by precipitation of calcium and carbonate ions, for example CaCl₂ and Na₂CO₃, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried.

A surface-modified calcium carbonate may feature surface-reacted GCC or PCC. A surface-reacted calcium carbonate may be prepared by providing a GCC or PCC in form of an aqueous suspension, and adding an acid to said suspension. Suitable acids are, for example, sulphuric acid, hydrochloric acid, phosphoric acid, citric acid, oxalic acid, or a mixture thereof. In a next step, the calcium carbonate is treated with gaseous carbon dioxide. If a strong acid such as sulphuric acid or hydrochloric acid is used for the acid treatment step, the carbon dioxide will form automatically *in situ.* Alternatively or additionally, the carbon dioxide can be supplied from an external source. Surface-reacted calcium carbonates are described, for example, in US 2012/0031576 A1, WO 2009/074492 A1, EP 2 264 109 A1, EP 2 070 991 A1, EP 2 264 108 A1, WO 00/39222 A1, WO 2004/083316 A1 or WO 2005/121257 A2.

In one preferred embodiment, the calcium carbonate-comprising filler material is marble.

According to one embodiment of the present invention, the amount of calcium carbonate in the calcium carbonate-comprising filler material is at least 80 wt.-%, e.g. at least 95 wt.-%, preferably between 97 and 100 wt.-%, more preferably between 98.5 and most preferably 99.95 wt.-%, based on the total dry weight of the calcium carbonate-comprising filler material.

The at least one calcium carbonate-comprising filler material is preferably in the form of a particulate material, and may have a particle size distribution as conventionally employed for the material(s) involved in the type of product to be produced. According to one embodiment of the present invention, the calcium carbonate-comprising filler material has a weight median particle size *d*₅₀ from 0.05 µm to 10 µm, preferably from 0.1 µm to 7 µm, more preferably from 0.25 µm to 5 µm, and most preferably from 0.5 µm to 4 µm.

According to one embodiment of the present invention, the calcium carbonate-comprising filler material has a top cut (*d*₉₈) of ≤ 15 µm, preferably of ≤ 12.5 µm, more preferably of ≤ 10 µm, and most preferably of ≤ 7.5 µm.

According to another embodiment, the calcium carbonate-comprising filler material has a BET specific surface area of from 0.5 and 150 m²/g, preferably from 0.5 to 50 m²/g, more preferably from 0.5 to 35 m²/g, and most preferably from 0.5 to 15 m²/g, as measured using nitrogen and the BET method according to ISO 9277.

According to one embodiment of the present invention, the calcium carbonate-comprising filler material has a weight median particle size *d*₅₀ from 0.05 µm to 10 µm and/or a top cut (*d*₉₈) of ≤ 15 µm and/or a BET specific surface area of from 0.5 and 150 m²/g, as measured using nitrogen and the BET method according to ISO 9277.

In one embodiment of the present invention, the at least one calcium carbonate-comprising filler material is preferably a marble having a median particle size diameter *d*₅₀ value from 0.05 µm to 10 µm, preferably from 0.1 µm to 7 µm, more preferably from 0.25 µm to 5 µm and most preferably from 0.5 µm to 4 µm. In this case, the at least one calcium carbonate-comprising filler material may exhibit a BET specific surface area of from 0.5 to 150 m²/g, preferably of from 0.5 to 50 m²/g, more preferably of from 0.5 to 35 m²/g and most preferably of from 0.5 to 15 m²/g, measured using nitrogen and the BET method according to ISO 9277.

It is preferred that the calcium carbonate-comprising filler material is a dry ground material, a material being wet ground and dried or a mixture of the foregoing materials. In general, the grinding step can be carried out with any conventional grinding device, for example, under conditions such that refinement predominantly results from impacts with a secondary body, i.e. in one or more of: a ball mill, a rod mill, a vibrating mill, a roll crusher, a centrifugal impact mill, a vertical bead mill an attrition mill, a pin mill, a hammer mill, a pulveriser, a shredder, a de-clumper, a knife cutter, or other such equipment known to the skilled man.

In case the calcium carbonate-comprising filler material is a wet ground calcium carbonate-comprising filler material, the grinding step may be performed under conditions such that autogenous grinding takes place and/or by horizontal ball milling, and/or other such processes known to the skilled man. It is to be noted that the same grinding methods can be used for dry grinding the calcium carbonate-comprising filler material. The wet processed ground calcium carbonate-comprising filler material thus obtained may be washed and dewatered by well-known processes, e.g. by flocculation, filtration or forced evaporation prior to drying. The subsequent step of drying may be carried out in a single step such as spray drying, or in at least two steps, e.g. by applying a first heating step to the calcium carbonate-comprising filler material in order to reduce the associated moisture content to a level which is not greater than about 0.5 wt.-%, based on the total dry weight of the calcium carbonate-comprising filler material. The residual total moisture content of the filler can be measured by the Karl Fischer coulometric titration method, desorbing the moisture in an oven at 195°C and passing it continuously into the KF coulometer (Mettler Toledo coulometric KF Titrator C30, combined with Mettler oven DO 0337) using dry N₂ at 100 ml/min for 10 min. The residual total moisture content can be determined with a calibration curve and also a blind of 10 min gas flow without a sample can be taken into account. The residual total moisture content may be further reduced by applying a second heating step to the calcium carbonate-comprising filler material. In case said drying is carried out by more than one drying steps, the first step may be carried out by heating in a hot current of air, while the second and further drying steps are preferably carried out by an indirect heating in which the atmosphere in the corresponding vessel comprises a surface treatment agent. It is also common that the calcium carbonate-comprising filler material is subjected to a beneficiation step (such as a flotation, bleaching or magnetic separation step) to remove impurities.

In one embodiment of the present invention, the calcium carbonate-comprising filler material comprises a dry ground calcium carbonate-comprising filler material. In another preferred embodiment, the calcium carbonate-comprising filler material is a material being wet ground in a horizontal ball mill, and subsequently dried by using the well-known process of spray drying.

According to the present invention the calcium carbonate-comprising filler material has a residual moisture content of ≤ 1 wt.-%, based on the total dry weight of the calcium carbonate-comprising filler material. Depending on the calcium carbonate-comprising filler material, the calcium carbonate-comprising filler material has a residual total moisture content of from 0.01 to 1 wt.-%, preferably from 0.01 to 0.2 wt.-%, more preferably from 0.02 to 0.15 wt.-% and most preferably from 0.04 to 0.15 wt.-%, based on the total dry weight of the calcium carbonate-comprising filler material.

For example, in case a wet ground and spray dried marble is used as calcium carbonate-comprising filler material, the residual total moisture content of the calcium carbonate-comprising filler material is preferably from 0.01 to 0.1 wt.-%, more preferably from 0.02 to 0.08 wt.-%, and most preferably from 0.04 to 0.07 wt.-%, based on the total dry weight of the calcium carbonate-comprising filler material. If a PCC is used as calcium carbonate-comprising filler material, the residual total moisture content of the calcium carbonate-comprising filler material is preferably of from 0.01 to 0.2 wt.-%, more preferably from 0.05 to 0.17 wt.-%, and most preferably from 0.05 to 0.10 wt.-%, based on the total dry weight of the calcium carbonate-comprising filler material.

According to the present invention the surface-treated filler material product further comprises a treatment layer on at least a part of the surface of the calcium carbonate-comprising filler material, wherein the treatment layer comprises
i) at least one mono-substituted succinic anhydride and/or at least one mono-substituted succinic acid and/or salty reaction products thereof, and/or
ii) a phosphoric acid ester or blend of one or more phosphoric acid mono-ester and salty reaction products thereof and/or one or more phosphoric acid di-ester and salty reaction products thereof.

According to one embodiment the surface-treated filler material product comprises the treatment layer in an amount of at least 0.1 wt.-%, based on the total dry weight of the calcium carbonate-comprising filler material, preferably in an amount from 0.1 to 3 wt.-%.

According to one embodiment the surface-treated filler material product comprises the treatment layer in an amount from 0.1 to 2.5 wt.-%, preferably in an amount of from 0.1 to 2 wt.-%, more preferably in an amount of from 0.1 to 1.5 wt.-%, even more preferably in an amount of from 0.1 to 1 wt.-%, and most preferably in an amount of from 0.2 to 0.8 wt.-%, based on the total dry weight of the calcium carbonate-containing filler material.

According to one embodiment the treatment layer is on the whole surface of the calcium carbonate-comprising filler material. The composition of the treatment layer and specific embodiments thereof will be described in more detail further below.

The surface-treated filler material product according to the present invention has excellent surface characteristics in comparison to mineral fillers treated with fatty acids and/or fatty acid salts having at least 10 chain carbon atoms, i.e. without the implementation of at least one mono-substituted succinic anhydride and/or at least one mono-substituted succinic acid and/or salty reaction products thereof, or the phosphoric acid ester or blend of one or more phosphoric acid mono-ester and salty reaction products thereof and/or one or more phosphoric acid di-ester and salty reaction products thereof.

In particular, it is appreciated that according to one embodiment the surface-treated filler material product has a volatile onset temperature of ≥ 250°C, preferably of ≥ 260°C, and most preferably of ≥ 270°C.

Additionally or alternatively, the surface-treated filler material product may have total volatiles between 25 and 350°C of less than 0.25 %, and preferably of less than 0.23 % by mass, e.g. of from 0.04 to 0.21 % by mass, preferably from 0.08 to 0.15 % by mass, more preferably from 0.1 to 0.12 % by mass.

Furthermore, the surface-treated filler material product may feature a low water pick up susceptibility. It is preferred that the moisture pick up susceptibility of the surface-treated filler material product is such that its total surface moisture level is less than 1 mg/g of dry calcium carbonate-comprising filler material, at a temperature of about +23°C (± 2°C). For example, the surface-treated filler material product has a moisture pick up susceptibility from 0.1 to 1 mg/g, more preferably from 0.2 to 0.9 mg/g; and most preferably of from 0.2 to 0.8 mg/g of dry calcium carbonate-comprising material at a temperature of +23°C (± 2°C).

Additionally or alternatively, the surface-treated filler material product may have a hydrophilicity of below 8:2 volumetric ratio of water : ethanol measured at +23°C (± 2°C) with the sedimentation method. For example, the surface-treated filler material product may have a hydrophilicity of below 7:3 volumetric ratio of water : ethanol measured at +23°C (± 2°C) with the sedimentation method.

In addition to the afore-mentioned advantageous surface characteristics, the chemical structure of the treatment layer of the surface-treated filler material product allows the customising or tailoring the surface properties of the filler material with respect to the envisaged application area. For example, the hydrophobicity or hydrophilicity of the surface-treated filler material product can be varied by introducing more hydrophobic or hydrophilic substituents into the treatment layer, i.e. into the at least one mono-substituted succinic anhydride and/or at least one mono-substituted succinic acid and/or salty reaction products thereof, or into the phosphoric acid ester or blend of one or more phosphoric acid mono-ester and salty reaction products thereof and/or one or more phosphoric acid di-ester and salty reaction products thereof. The surface-treated filler material product used in the process of the present invention has also the advantage that is has an improved thermal stability compared to filler materials, which have been surface-treated with aliphatic carboxylic acids or salts thereof. While mineral fillers treated with fatty acids and/or fatty acid salts having at least 10 chain carbon atoms usually are not thermally stable above 230°C, the surface-treated filler material products used in the process of the present invention are thermally stable at temperatures above 230°C, e.g. up to temperatures of 250°C, 270°C, or 290°C.

Methods for preparing the surface-treated filler material products are described in WO 2014/060286 A1 and WO 2014/128087 A1.

In addition to the surface-treated filler material product, the at least one powder material may comprise additional inorganic powders and/or organic powders.

The additional inorganic powder may be selected from the group comprising natural ground calcium carbonate (GCC); precipitated calcium carbonate (PCC); calcium carbonate-containing minerals such as dolomite, mixed carbonate based fillers such as calcium associated with magnesium containing mineral, such as talc, or with clay; mica; and mixtures of same, such as talc-calcium carbonate or calcium carbonate-kaolin mixtures, or mixtures of natural ground calcium carbonate with aluminium hydroxide, mica or with synthetic or natural fibres, or co-structures of minerals such as talc-calcium carbonate or talc-titanium dioxide co-structures. The additional organic powder may be selected from the group comprising wood flour, modified starch, and mixtures thereof. The additional inorganic powders and/or organic powders can also be surface-treated, e.g. with fatty acids such as stearic acid or palmitic acid.

According to one embodiment of the present invention, the at least one powder material is added in an amount from 50 to 99 wt.-%, based on the total weight of the compacted material, preferably from 60 to 98 wt.-%, more preferably from 80 to 92 wt.-%, and most preferably from 87 to 90 wt.-%.

### Treatment layer i)

According to one embodiment of the present invention, the surface-treated filler material product comprises a treatment layer on at least a part of the surface of the calcium carbonate-comprising filler material, wherein the treatment layer comprises at least one mono-substituted succinic anhydride and/or at least one mono-substituted succinic acid and/or salty reaction products thereof.

It is appreciated that the expression "at least one" mono-substituted succinic anhydride means that one or more kinds of mono-substituted succinic anhydride may be provided in the process of the present invention.

Accordingly, it should be noted that the at least one mono-substituted succinic anhydride may be one kind of mono-substituted succinic anhydride. Alternatively, the at least one mono-substituted succinic anhydride may be a mixture of two or more kinds of mono-substituted succinic anhydride. For example, the at least one mono-substituted succinic anhydride may be a mixture of two or three kinds of mono-substituted succinic anhydride, like two kinds of mono-substituted succinic anhydride.

In one embodiment of the present invention, the at least one mono-substituted succinic anhydride is one kind of mono-substituted succinic anhydride.

It is appreciated that the at least one mono-substituted succinic anhydride represents a surface treatment agent and consists of succinic anhydride mono-substituted with a group selected from any linear, branched, aliphatic and cyclic group having a total amount of carbon atoms from C2 to C30 in the substituent.

In one embodiment of the present invention, the at least one mono-substituted succinic anhydride consists of succinic anhydride mono-substituted with a group selected from a linear, branched, aliphatic and cyclic group having a total amount of carbon atoms from C3 to C20 in the substituent. For example, the at least one mono-substituted succinic anhydride consists of succinic anhydride mono-substituted with a group selected from a linear, branched, aliphatic and cyclic group having a total amount of carbon atoms from C4 to C18 in the substituent.

In one embodiment of the present invention, the at least one mono-substituted succinic anhydride consists of succinic anhydride mono-substituted with one group being a linear and aliphatic group having a total amount of carbon atoms from C2 to C30, preferably from C3 to C20 and most preferably from C4 to C18 in the substituent. Additionally or alternatively, the at least one mono-substituted succinic anhydride consists of succinic anhydride mono-substituted with one group being a branched and aliphatic group having a total amount of carbon atoms from C2 to C30, preferably from C3 to C20 and most preferably from C4 to C18 in the substituent.

Thus, it is preferred that the at least one mono-substituted succinic anhydride consists of succinic anhydride mono-substituted with one group being a linear or branched, alkyl group having a total amount of carbon atoms from C2 to C30, preferably from C3 to C20 and most preferably from C4 to C18 in the substituent.

For example, the at least one mono-substituted succinic anhydride consists of succinic anhydride mono-substituted with one group being a linear alkyl group having a total amount of carbon atoms from C2 to C30, preferably from C3 to C20 and most preferably from C4 to C18 in the substituent. Additionally or alternatively, the at least one mono-substituted succinic anhydride consists of succinic anhydride mono-substituted with one group being a branched alkyl group having a total amount of carbon atoms from C2 to C30, preferably from C3 to C20 and most preferably from C4 to C18 in the substituent.

The term "alkyl" in the meaning of the present invention refers to a linear or branched, saturated organic compound composed of carbon and hydrogen. In other words, "alkyl mono-substituted succinic anhydrides" are composed of linear or branched, saturated hydrocarbon chains containing a pendant succinic anhydride group.

In one embodiment of the present invention, the at least one mono-substituted succinic anhydride is at least one linear or branched alkyl mono-substituted succinic anhydride. For example, the at least one alkyl mono-substituted succinic anhydride is selected from the group comprising ethylsuccinic anhydride, propylsuccinic anhydride, butylsuccinic anhydride, triisobutyl succinic anhydride, pentylsuccinic anhydride, hexylsuccinic anhydride, heptylsuccinic anhydride, octylsuccinic anhydride, nonylsuccinic anhydride, decyl succinic anhydride, dodecyl succinic anhydride, hexadecanyl succinic anhydride, octadecanyl succinic anhydride, and mixtures thereof.

Accordingly, it is appreciated that e.g. the term "butylsuccinic anhydride" comprises linear and branched butylsuccinic anhydride(s). One specific example of linear butylsuccinic anhydride(s) is n-butylsuccinic anhydride. Specific examples of branched butylsuccinic anhydride(s) are iso-butylsuccinic anhydride, sec-butylsuccinic anhydride and/or tert-butylsuccinic anhydride.

Furthermore, it is appreciated that e.g. the term "hexadecanyl succinic anhydride" comprises linear and branched hexadecanyl succinic anhydride(s). One specific example of linear hexadecanyl succinic anhydride(s) is n-hexadecanyl succinic anhydride. Specific examples of branched hexadecanyl succinic anhydride(s) are 14-methylpentadecanyl succinic anhydride, 13-methylpentadecanyl succinic anhydride, 12-methylpentadecanyl succinic anhydride, 11-methylpentadecanyl succinic anhydride, 10-methylpentadecanyl succinic anhydride, 9-methylpentadecanyl succinic anhydride, 8-methylpentadecanyl succinic anhydride, 7-methylpentadecanyl succinic anhydride, 6-methylpentadecanyl succinic anhydride, 5-methylpentadecanyl succinic anhydride, 4-methylpentadecanyl succinic anhydride, 3-methylpentadecanyl succinic anhydride, 2-methylpentadecanyl succinic anhydride, 1-methylpentadecanyl succinic anhydride, 13-ethylbutadecanyl succinic anhydride, 12-ethylbutadecanyl succinic anhydride, 11-ethylbutadecanyl succinic anhydride, 10-ethylbutadecanyl succinic anhydride, 9-ethylbutadecanyl succinic anhydride, 8-ethylbutadecanyl succinic anhydride, 7-ethylbutadecanyl succinic anhydride, 6-ethylbutadecanyl succinic anhydride, 5-ethylbutadecanyl succinic anhydride, 4-ethylbutadecanyl succinic anhydride, 3-ethylbutadecanyl succinic anhydride, 2-ethylbutadecanyl succinic anhydride, 1-ethylbutadecanyl succinic anhydride, 2-butyldodecanyl succinic anhydride, 1-hexyldecanyl succinic anhydride, 1-hexyl-2-decanyl succinic anhydride, 2-hexyldecanyl succinic anhydride, 6,12-dimethylbutadecanyl succinic anhydride, 2,2-diethyldodecanyl succinic anhydride, 4,8,12-trimethyltridecanyl succinic anhydride, 2,2,4,6,8-pentamethylundecanyl succinic anhydride, 2-ethyl-4-methyl-2-(2-methylpentyl)-heptyl succinic anhydride and/or 2-ethyl-4,6-dimethyl-2-propylnonyl succinic anhydride.

Furthermore, it is appreciated that e.g. the term "octadecanyl succinic anhydride" comprises linear and branched octadecanyl succinic anhydride(s). One specific example of linear octadecanyl succinic anhydride(s) is n-octadecanyl succinic anhydride. Specific examples of branched hexadecanyl succinic anhydride(s) are 16-methylheptadecanyl succinic anhydride, 15-methylheptadecanyl succinic anhydride, 14-methylheptadecanyl succinic anhydride, 13-methylheptadecanyl succinic anhydride, 12-methylheptadecanyl succinic anhydride, 11-methylheptadecanyl succinic anhydride, 10-methylheptadecanyl succinic anhydride, 9-methylheptadecanyl succinic anhydride, 8-methylheptadecanyl succinic anhydride, 7-methylheptadecanyl succinic anhydride, 6-methylheptadecanyl succinic anhydride, 5-methylheptadecanyl succinic anhydride, 4-methylheptadecanyl succinic anhydride, 3-methylheptadecanyl succinic anhydride, 2-methylheptadecanyl succinic anhydride, 1-methylheptadecanyl succinic anhydride, 14-ethylhexadecanyl succinic anhydride, 13-ethylhexadecanyl succinic anhydride, 12-ethylhexadecanyl succinic anhydride, 11-ethylhexadecanyl succinic anhydride, 10-ethylhexadecanyl succinic anhydride, 9-ethylhexadecanyl succinic anhydride, 8-ethylhexadecanyl succinic anhydride, 7-ethylhexadecanyl succinic anhydride, 6-ethylhexadecanyl succinic anhydride, 5-ethylhexadecanyl succinic anhydride, 4-ethylhexadecanyl succinic anhydride, 3-ethylhexadecanyl succinic anhydride, 2-ethylhexadecanyl succinic anhydride, 1-ethylhexadecanyl succinic anhydride, 2-hexyldodecanyl succinic anhydride, 2-heptylundecanyl succinic anhydride, iso-octadecanyl succinic anhydride and/or 1-octyl-2-decanyl succinic anhydride.

In one embodiment of the present invention, the at least one alkyl mono-substituted succinic anhydride is selected from the group comprising butylsuccinic anhydride, hexylsuccinic anhydride, heptylsuccinic anhydride, octylsuccinic anhydride, hexadecanyl succinic anhydride, octadecanyl succinic anhydride, and mixtures thereof.

In one embodiment of the present invention, the at least one mono-substituted succinic anhydride is one kind of alkyl mono-substituted succinic anhydride. For example, the one alkyl mono-substituted succinic anhydride is butylsuccinic anhydride. Alternatively, the one alkyl mono-substituted succinic anhydride is hexylsuccinic anhydride. Alternatively, the one alkyl mono-substituted succinic anhydride is heptylsuccinic anhydride or octylsuccinic anhydride. Alternatively, the one alkyl mono-substituted succinic anhydride is hexadecanyl succinic anhydride. For example, the one alkyl mono-substituted succinic anhydride is linear hexadecanyl succinic anhydride such as n-hexadecanyl succinic anhydride or branched hexadecanyl succinic anhydride such as 1-hexyl-2-decanyl succinic anhydride. Alternatively, the one alkyl mono-substituted succinic anhydride is octadecanyl succinic anhydride. For example, the one alkyl mono-substituted succinic anhydride is linear octadecanyl succinic anhydride such as n-octadecanyl succinic anhydride or branched octadecanyl succinic anhydride such as iso-octadecanyl succinic anhydride or 1-octyl-2-decanyl succinic anhydride.

In one embodiment of the present invention, the one alkyl mono-substituted succinic anhydride is butylsuccinic anhydride such as n-butylsuccinic anhydride.

In one embodiment of the present invention, the at least one mono-substituted succinic anhydride is a mixture of two or more kinds of alkyl mono-substituted succinic anhydrides. For example, the at least one mono-substituted succinic anhydride is a mixture of two or three kinds of alkyl mono-substituted succinic anhydrides.

In one embodiment of the present invention, the at least one mono-substituted succinic anhydride consists of succinic anhydride mono-substituted with one group being a linear or branched alkenyl group having a total amount of carbon atoms from C2 to C30, preferably from C3 to C20 and most preferably from C4 to C18 in the substituent.

The term "alkenyl" in the meaning of the present invention refers to a linear or branched, unsaturated organic compound composed of carbon and hydrogen. Said organic compound further contains at least one double bond in the substituent, preferably one double bond. In other words, "alkenyl mono-substituted succinic anhydrides" are composed of linear or branched, unsaturated hydrocarbon chains containing a pendant succinic anhydride group. It is appreciated that the term "alkenyl" in the meaning of the present invention includes the cis and trans isomers.

In one embodiment of the present invention, the at least one mono-substituted succinic anhydride is at least one linear or branched alkenyl mono-substituted succinic anhydride. For example, the at least one alkenyl mono-substituted succinic anhydride is selected from the group comprising ethenylsuccinic anhydride, propenylsuccinic anhydride, butenylsuccinic anhydride, triisobutenyl succinic anhydride, pentenylsuccinic anhydride, hexenylsuccinic anhydride, heptenylsuccinic anhydride, octenylsuccinic anhydride, nonenylsuccinic anhydride, decenyl succinic anhydride, dodecenyl succinic anhydride, hexadecenyl succinic anhydride, octadecenyl succinic anhydride, and mixtures thereof.

Accordingly, it is appreciated that e.g. the term "hexadecenyl succinic anhydride" comprises linear and branched hexadecenyl succinic anhydride(s). One specific example of linear hexadecenyl succinic anhydride(s) is n-hexadecenyl succinic anhydride such as 14-hexadecenyl succinic anhydride, 13-hexadecenyl succinic anhydride, 12-hexadecenyl succinic anhydride, 11-hexadecenyl succinic anhydride, 10-hexadecenyl succinic anhydride, 9-hexadecenyl succinic anhydride, 8-hexadecenyl succinic anhydride, 7-hexadecenyl succinic anhydride, 6-hexadecenyl succinic anhydride, 5-hexadecenyl succinic anhydride, 4-hexadecenyl succinic anhydride, 3-hexadecenyl succinic anhydride and/or 2-hexadecenyl succinic anhydride. Specific examples of branched hexadecenyl succinic anhydride(s) are 14-methyl-9-pentadecenyl succinic anhydride, 14-methyl-2-pentadecenyl succinic anhydride, 1-hexyl-2-decenyl succinic anhydride and/or iso-hexadecenyl succinic anhydride.

Furthermore, it is appreciated that e.g. the term "octadecenyl succinic anhydride" comprises linear and branched octadecenyl succinic anhydride(s). One specific example of linear octadecenyl succinic anhydride(s) is n-octadecenyl succinic anhydride such as 16-octadecenyl succinic anhydride, 15-octadecenyl succinic anhydride, 14-octadecenyl succinic anhydride, 13-octadecenyl succinic anhydride, 12-octadecenyl succinic anhydride, 11-octadecenyl succinic anhydride, 10-octadecenyl succinic anhydride, 9-octadecenyl succinic anhydride, 8-octadecenyl succinic anhydride, 7-octadecenyl succinic anhydride, 6-octadecenyl succinic anhydride, 5-octadecenyl succinic anhydride, 4-octadecenyl succinic anhydride, 3-octadecenyl succinic anhydride and/or 2-octadecenyl succinic anhydride. Specific examples of branched octadecenyl succinic anhydride(s) are 16-methyl-9-heptadecenyl succinic anhydride, 16-methyl-7-heptadecenyl succinic anhydride, 1-octyl-2-decenyl succinic anhydride and/or iso-octadecenyl succinic anhydride.

In one embodiment of the present invention, the at least one alkenyl mono-substituted succinic anhydride is selected from the group comprising hexenylsuccinic anhydride, octenylsuccinic anhydride, hexadecenyl succinic anhydride, octadecenyl succinic anhydride, and mixtures thereof.

In one embodiment of the present invention, the at least one mono-substituted succinic anhydride is one alkenyl mono-substituted succinic anhydride. For example, the one alkenyl mono-substituted succinic anhydride is hexenylsuccinic anhydride. Alternatively, the one alkenyl mono-substituted succinic anhydride is octenylsuccinic anhydride. Alternatively, the one alkenyl mono-substituted succinic anhydride is hexadecenyl succinic anhydride. For example, the one alkenyl mono-substituted succinic anhydride is linear hexadecenyl succinic anhydride such as n-hexadecenyl succinic anhydride or branched hexadecenyl succinic anhydride such as 1-hexyl-2-decenyl succinic anhydride. Alternatively, the one alkenyl mono-substituted succinic anhydride is octadecenyl succinic anhydride. For example, the one alkyl mono-substituted succinic anhydride is linear octadecenyl succinic anhydride such as n-octadecenyl succinic anhydride or branched octadecenyl succinic anhydride such iso-octadecenyl succinic anhydride, or 1-octyl-2-decenyl succinic anhydride.

In one embodiment of the present invention, the one alkenyl mono-substituted succinic anhydride is linear octadecenyl succinic anhydride such as n-octadecenyl succinic anhydride. In another embodiment of the present invention, the one alkenyl mono-substituted succinic anhydride is linear octenylsuccinic anhydride such as n-octenylsuccinic anhydride.

If the at least one mono-substituted succinic anhydride is one alkenyl mono-substituted succinic anhydride, it is appreciated that the one alkenyl mono-substituted succinic anhydride is present in an amount of ≥ 95 wt.-% and preferably of ≥ 96.5 wt.-%, based on the total weight of the at least one mono-substituted succinic anhydride.

In one embodiment of the present invention, the at least one mono-substituted succinic anhydride is a mixture of two or more kinds of alkenyl mono-substituted succinic anhydrides. For example, the at least one mono-substituted succinic anhydride is a mixture of two or three kinds of alkenyl mono-substituted succinic anhydrides.

If the at least one mono-substituted succinic anhydride is a mixture of two or more kinds of alkenyl mono-substituted succinic anhydrides, one alkenyl mono-substituted succinic anhydride is linear or branched octadecenyl succinic anhydride, while each further alkenyl mono-substituted succinic anhydride is selected from ethenylsuccinic anhydride, propenylsuccinic anhydride, butenylsuccinic anhydride, pentenylsuccinic anhydride, hexenylsuccinic anhydride, heptenylsuccinic anhydride, nonenylsuccinic anhydride, hexadecenyl succinic anhydride and mixtures thereof. For example, the at least one mono-substituted succinic anhydride is a mixture of two or more kinds of alkenyl mono-substituted succinic anhydrides, wherein one alkenyl mono-substituted succinic anhydride is linear octadecenyl succinic anhydride and each further alkenyl mono-substituted succinic anhydride is selected from ethenylsuccinic anhydride, propenylsuccinic anhydride, butenylsuccinic anhydride, pentenylsuccinic anhydride, hexenylsuccinic anhydride, heptenylsuccinic anhydride, nonenylsuccinic anhydride, hexadecenyl succinic anhydride and mixtures thereof. Alternatively, the at least one mono-substituted succinic anhydride is a mixture of two or more kinds of alkenyl mono-substituted succinic anhydrides, wherein one alkenyl mono-substituted succinic anhydride is branched octadecenyl succinic anhydride and each further alkenyl mono-substituted succinic anhydride is selected from ethenylsuccinic anhydride, propenylsuccinic anhydride, butenylsuccinic anhydride, pentenylsuccinic anhydride, hexenylsuccinic anhydride, heptenylsuccinic anhydride, nonenylsuccinic anhydride, hexadecenyl succinic anhydride and mixtures thereof.

For example, the at least one mono-substituted succinic anhydride is a mixture of two or more kinds of alkenyl mono-substituted succinic anhydrides comprising one or more hexadecenyl succinic anhydride, like linear or branched hexadecenyl succinic anhydride(s), and one or more octadecenyl succinic anhydride, like linear or branched octadecenyl succinic anhydride(s).

In one embodiment of the present invention, the at least one mono-substituted succinic anhydride is a mixture of two or more kinds of alkenyl mono-substituted succinic anhydrides comprising linear hexadecenyl succinic anhydride(s) and linear octadecenyl succinic anhydride(s). Alternatively, the at least one mono-substituted succinic anhydride is a mixture of two or more kinds of alkenyl mono-substituted succinic anhydrides comprising branched hexadecenyl succinic anhydride(s) and branched octadecenyl succinic anhydride(s). For example, the one or more hexadecenyl succinic anhydride is linear hexadecenyl succinic anhydride like n-hexadecenyl succinic anhydride and/or branched hexadecenyl succinic anhydride like 1-hexyl-2-decenyl succinic anhydride. Additionally or alternatively, the one or more octadecenyl succinic anhydride is linear octadecenyl succinic anhydride like n-octadecenyl succinic anhydride and/or branched octadecenyl succinic anhydride like iso-octadecenyl succinic anhydride and/or 1-octyl-2-decenyl succinic anhydride.

If the at least one mono-substituted succinic anhydride is a mixture of two or more kinds of alkenyl mono-substituted succinic anhydrides, it is appreciated that one alkenyl mono-substituted succinic anhydride is present in an amount of from 20 to 60 wt.-% and preferably of from 30 to 50 wt.-%, based on the total weight of the at least one mono-substituted succinic anhydride provided.

For example, if the at least one mono-substituted succinic anhydride is a mixture of two or more kinds of alkenyl mono-substituted succinic anhydrides comprising one or more hexadecenyl succinic anhydride(s), like linear or branched hexadecenyl succinic anhydride(s), and one or more octadecenyl succinic anhydride(s), like linear or branched hexadecenyl succinic anhydride(s), it is preferred that the one or more octadecenyl succinic anhydride(s) is present in an amount of from 20 to 60 wt.-% and preferably of from 30 to 50 wt.-%, based on the total weight of the at least one mono-substituted succinic anhydride.

It is also appreciated that the at least one mono-substituted succinic anhydride may be a mixture of at least one alkyl mono-substituted succinic anhydrides and at least one alkenyl mono-substituted succinic anhydrides.

If the at least one mono-substituted succinic anhydride is a mixture of at least one alkyl mono-substituted succinic anhydrides and at least one alkenyl mono-substituted succinic anhydrides, it is appreciated that the alkyl substituent of the at least one alkyl mono-substituted succinic anhydrides and the alkenyl substituent of the at least one alkenyl mono-substituted succinic anhydrides are preferably the same. For example, the at least one mono-substituted succinic anhydride is a mixture of ethylsuccinic anhydride and ethenylsuccinic anhydride. Alternatively, the at least one mono-substituted succinic anhydride is a mixture of propylsuccinic anhydride and propenylsuccinic anhydride. Alternatively, the at least one mono-substituted succinic anhydride is a mixture of butylsuccinic anhydride and butenylsuccinic anhydride. Alternatively, the at least one mono-substituted succinic anhydride is a mixture of triisobutyl succinic anhydride and triisobutenyl succinic anhydride. Alternatively, the at least one mono-substituted succinic anhydride is a mixture of pentylsuccinic anhydride and pentenylsuccinic anhydride. Alternatively, the at least one mono-substituted succinic anhydride is a mixture of hexylsuccinic anhydride and hexenylsuccinic anhydride. Alternatively, the at least one mono-substituted succinic anhydride is a mixture of heptylsuccinic anhydride and heptenylsuccinic anhydride. Alternatively, the at least one mono-substituted succinic anhydride is a mixture of octylsuccinic anhydride and octenylsuccinic anhydride. Alternatively, the at least one mono-substituted succinic anhydride is a mixture of nonylsuccinic anhydride and nonenylsuccinic anhydride. Alternatively, the at least one mono-substituted succinic anhydride is a mixture of decyl succinic anhydride and decenyl succinic anhydride. Alternatively, the at least one mono-substituted succinic anhydride is a mixture of dodecyl succinic anhydride and dodecenyl succinic anhydride. Alternatively, the at least one mono-substituted succinic anhydride is a mixture of hexadecanyl succinic anhydride and hexadecenyl succinic anhydride. For example, the at least one mono-substituted succinic anhydride is a mixture of linear hexadecanyl succinic anhydride and linear hexadecenyl succinic anhydride or a mixture of branched hexadecanyl succinic anhydride and branched hexadecenyl succinic anhydride. Alternatively, the at least one mono-substituted succinic anhydride is a mixture of octadecanyl succinic anhydride and octadecenyl succinic anhydride. For example, the at least one mono-substituted succinic anhydride is a mixture of linear octadecanyl succinic anhydride and linear octadecenyl succinic anhydride or a mixture of branched octadecanyl succinic anhydride and branched octadecenyl succinic anhydride.

In one embodiment of the present invention, the at least one mono-substituted succinic anhydride is a mixture of nonylsuccinic anhydride and nonenylsuccinic anhydride.

If the at least one mono-substituted succinic anhydride is a mixture of at least one alkyl mono-substituted succinic anhydrides and at least one alkenyl mono-substituted succinic anhydrides, the weight ratio between the at least one alkyl mono-substituted succinic anhydride and the at least one alkenyl mono-substituted succinic anhydride is between 90:10 and 10:90 (wt.-%/wt.-%). For example, the weight ratio between the at least one alkyl mono-substituted succinic anhydride and the at least one alkenyl mono-substituted succinic anhydride is between 70:30 and 30:70 (wt.-% / wt.-%) or between 60:40 and 40:60 (wt.-% / wt.-%).

It is appreciated that the expression "at least one" mono-substituted succinic acid means that one or more kinds of mono-substituted succinic acid may be provided in the process of the present invention.

Accordingly, it should be noted that the at least one mono-substituted succinic acid may be one kind of mono-substituted succinic acid. Alternatively, the at least one mono-substituted succinic acid may be a mixture of two or more kinds of mono-substituted succinic acid. For example, the at least one mono-substituted succinic acid may be a mixture of two or three kinds of mono-substituted succinic acid, like two kinds of mono-substituted succinic acid.

In one embodiment of the present invention, the at least one mono-substituted succinic acid is one kind of mono-substituted succinic acid.

It is appreciated that the at least one mono-substituted succinic acid represents a surface treatment agent and consists of succinic acid mono-substituted with a group selected from any linear, branched, aliphatic and cyclic group having a total amount of carbon atoms from C2 to C30 in the substituent.

In one embodiment of the present invention, the at least one mono-substituted succinic acid consists of succinic acid mono-substituted with a group selected from a linear, branched, aliphatic and cyclic group having a total amount of carbon atoms from C3 to C20 in the substituent. For example, the at least one mono-substituted succinic acid consists of succinic acid mono-substituted with a group selected from a linear, branched, aliphatic and cyclic group having a total amount of carbon atoms from C4 to C18 in the substituent.

It is appreciated that the at least one mono-substituted succinic anhydride and the at least one mono-substituted succinic acid may comprise the same or different substituent.

In one embodiment of the present invention, the succinic acid molecule of the at least one mono-substituted succinic acid and the succinic anhydride molecule of the at least one mono-substituted succinic anhydride are mono-substituted with the same group selected from any linear, branched, aliphatic and cyclic group having a total amount of carbon atoms from C2 to C30, preferably from C3 to C20 and most preferably from C4 to C18 in the substituent.

If the at least one mono-substituted succinic anhydride is provided in combination with at least one mono-substituted succinic acid, the at least one mono-substituted succinic acid is present in an amount of ≤ 10 mol.-%, based on the molar sum of the at least one mono-substituted succinic anhydride and the at least one mono-substituted succinic acid. For example, the at least one mono-substituted succinic acid is present in an amount of ≤ 5 mol.-%, preferably of ≤ 2.5 mol.-% and most preferably of ≤ 1 mol.-%, based on the molar sum of the at least one mono-substituted succinic anhydride and the at least one mono-substituted succinic acid.

According to one embodiment the salty reaction product(s) of the mono-substituted succinic acid and/or the at least one mono-substituted succinic anhydride are one or more calcium and/or magnesium salts thereof.

According to one embodiment the salty reaction product(s) of the mono-substituted succinic acid and/or the at least one mono-substituted succinic anhydride formed on at least a part of the surface of the calcium carbonate-comprising filler material are one or more calcium salts and/or one or more magnesium salts thereof.

According to one embodiment the molar ratio of the at least one mono-substituted succinic anhydride and the optional at least one mono-substituted succinic acid to the salty reaction product(s) thereof is from 99.9:0.1 to 0.1:99.9, preferably from 70:30 to 90:10.

According to one embodiment the treatment layer further comprises an organic material such as a polysiloxane.

According to one embodiment of the present invention, the surface-treated filler material product comprises, and preferably consists of, calcium carbonate-comprising filler material and a treatment layer comprising at least one mono-substituted succinic anhydride and/or at least one mono-substituted succinic acid and/or salty reaction product(s) thereof. The treatment layer is formed on at least a part of the surface, preferably on the whole surface, of said calcium carbonate-comprising filler material.

In case the treatment layer on the surface of the calcium carbonate-comprising filler material comprises at least one mono-substituted succinic acid, it is preferred that the at least one mono-substituted succinic acid is formed from the applied at least one mono-substituted succinic anhydride. That is to say, the substituent of the at least one mono-substituted succinic acid and the substituent of the at least one mono-substituted succinic anhydride are the same.

Additionally or alternatively, the at least one mono-substituted succinic acid is provided in a blend together with the at least one mono-substituted succinic anhydride.

In one embodiment of the present invention, the treatment layer formed on the surface of the calcium carbonate-comprising filler material comprises the at least one mono-substituted succinic anhydride and at least one mono-substituted succinic acid or salty reaction product(s) thereof obtained from contacting the calcium carbonate-comprising filler material with the at least one mono-substituted succinic anhydride and the optional at least one mono-substituted succinic acid. Alternatively, the treatment layer formed on the surface of the calcium carbonate-comprising filler material comprises the at least one mono-substituted succinic anhydride and at least one mono-substituted succinic acid and salty reaction product(s) thereof obtained from contacting the calcium carbonate-comprising filler material with the at least one mono-substituted succinic anhydride and the optional at least one mono-substituted succinic acid.

### Treatment layer ii)

According to another embodiment of the present invention, the surface-treated filler material product comprises a treatment layer on at least a part of the surface of the calcium carbonate-comprising filler material, wherein the treatment layer comprises a phosphoric acid ester or blend of one or more phosphoric acid mono-ester and salty reaction products thereof and/or one or more phosphoric acid di-ester and salty reaction products thereof.

According to still another embodiment of the present invention, the surface-treated filler material product comprises a treatment layer on at least a part of the surface of the calcium carbonate-comprising filler material, wherein the treatment layer comprises at least one mono-substituted succinic anhydride and/or at least one mono-substituted succinic acid and/or salty reaction products thereof, and a phosphoric acid ester or blend of one or more phosphoric acid mono-ester and salty reaction products thereof and/or one or more phosphoric acid di-ester and salty reaction products thereof.

Alkyl esters of phosphoric acid are well known in the industry especially as surfactants, lubricants and antistatic agents (Die Tenside; Kosswig und Stache, Carl Hanser Verlag München, 1993).

The synthesis of alkyl esters of phosphoric acid by different methods and the surface treatment of minerals with alkyl esters of phosphoric acid are well known by the skilled man, e.g. from Pesticide Formulations and Application Systems: 15th Volume; Collins HM, Hall FR, Hopkinson M, STP1268; Published: 1996, US 3,897,519 A, US 4,921,990 A, US 4,350,645 A, US 6,710,199 B2, US 4,126,650 A, US 5,554,781 A, EP 1092000 B1 and WO 2008/023076 A1.

It is appreciated that the expression "one or more" phosphoric acid mono-ester means that one or more kinds of phosphoric acid mono-ester may be present in the phosphoric acid ester blend.

Accordingly, it should be noted that the one or more phosphoric acid mono-ester may be one kind of phosphoric acid mono-ester. Alternatively, the one or more phosphoric acid mono-ester may be a mixture of two or more kinds of phosphoric acid mono-ester. For example, the one or more phosphoric acid mono-ester may be a mixture of two or three kinds of phosphoric acid mono-ester, like two kinds of phosphoric acid mono-ester.

In one embodiment of the present invention, the one or more phosphoric acid mono-ester consists of an o-phosphoric acid molecule esterified with one alcohol selected from unsaturated or saturated, branched or linear, aliphatic or aromatic alcohols having a total amount of carbon atoms from C6 to C30 in the alcohol substituent. For example, the one or more phosphoric acid mono-ester consists of an o-phosphoric acid molecule esterified with one alcohol selected from unsaturated or saturated, branched or linear, aliphatic or aromatic alcohols having a total amount of carbon atoms from C8 to C22, more preferably from C8 to C20 and most preferably from C8 to C18 in the alcohol substituent.

In one embodiment of the present invention, the one or more phosphoric acid mono-ester consists of an o-phosphoric acid molecule esterified with one alcohol selected from saturated and linear or branched and aliphatic alcohols having a total amount of carbon atoms from C6 to C30 in the alcohol substituent. For example, the one or more phosphoric acid mono-ester consists of an o-phosphoric acid molecule esterified with one alcohol selected from saturated and linear or branched and aliphatic alcohols having a total amount of carbon atoms from C8 to C22, more preferably from C8 to C20 and most preferably from C8 to C18 in the alcohol substituent.

In one embodiment of the present invention, the one or more phosphoric acid mono-ester consists of an o-phosphoric acid molecule esterified with one alcohol selected from saturated and linear and aliphatic alcohols having a total amount of carbon atoms from C6 to C30, preferably from C8 to C22, more preferably from C8 to C20 and most preferably from C8 to C18 in the alcohol substituent. Alternatively, the one or more phosphoric acid mono-ester consists of an o-phosphoric acid molecule esterified with one alcohol selected from saturated and branched and aliphatic alcohols having a total amount of carbon atoms from C6 to C30, preferably from C8 to C22, more preferably from C8 to C20 and most preferably from C8 to C18 in the alcohol substituent.

In one embodiment of the present invention, the one or more phosphoric acid mono-ester is selected from the group comprising hexyl phosphoric acid mono-ester, heptyl phosphoric acid mono-ester, octyl phosphoric acid mono-ester, 2-ethylhexyl phosphoric acid mono-ester, nonyl phosphoric acid mono-ester, decyl phosphoric acid mono-ester, undecyl phosphoric acid mono-ester, dodecyl phosphoric acid mono-ester, tetradecyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octal-1-dodecylphosphoric acid mono-ester and mixtures thereof.

For example, the one or more phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octal-1-dodecylphosphoric acid mono-ester and mixtures thereof. In one embodiment of the present invention, the one or more phosphoric acid mono-ester is 2-octyl-1-dodecylphosphoric acid mono-ester.

It is appreciated that the expression "one or more" phosphoric acid di-ester means that one or more kinds of phosphoric acid di-ester may be present in the treatment layer of the surface-treated material product and/or the phosphoric acid ester blend.

Accordingly, it should be noted that the one or more phosphoric acid di-ester may be one kind of phosphoric acid di-ester. Alternatively, the one or more phosphoric acid di-ester may be a mixture of two or more kinds of phosphoric acid di-ester. For example, the one or more phosphoric acid di-ester may be a mixture of two or three kinds of phosphoric acid di-ester, like two kinds of phosphoric acid di-ester.

In one embodiment of the present invention, the one or more phosphoric acid di-ester consists of an o-phosphoric acid molecule esterified with two alcohols selected from unsaturated or saturated, branched or linear, aliphatic or aromatic alcohols having a total amount of carbon atoms from C6 to C30 in the alcohol substituent. For example, the one or more phosphoric acid di-ester consists of an o-phosphoric acid molecule esterified with two fatty alcohols selected from unsaturated or saturated, branched or linear, aliphatic or aromatic alcohols having a total amount of carbon atoms from C8 to C22, more preferably from C8 to C20 and most preferably from C8 to C18 in the alcohol substituent.

It is appreciated that the two alcohols used for esterifying the phosphoric acid may be independently selected from the same or different, unsaturated or saturated, branched or linear, aliphatic or aromatic alcohols having a total amount of carbon atoms from C6 to C30 in the alcohol substituent. In other words, the one or more phosphoric acid di-ester may comprise two substituents being derived from the same alcohols or the phosphoric acid di-ester molecule may comprise two substituents being derived from different alcohols.

In one embodiment of the present invention, the one or more phosphoric acid di-ester consists of an o-phosphoric acid molecule esterified with two alcohols selected from the same or different, saturated and linear or branched and aliphatic alcohols having a total amount of carbon atoms from C6 to C30 in the alcohol substituent. For example, the one or more phosphoric acid di-ester consists of an o-phosphoric acid molecule esterified with two alcohols selected from the same or different, saturated and linear or branched and aliphatic alcohols having a total amount of carbon atoms from C8 to C22, more preferably from C8 to C20 and most preferably from C8 to C18 in the alcohol substituent.

In one embodiment of the present invention, the one or more phosphoric acid di-ester consists of an o-phosphoric acid molecule esterified with two alcohols selected from the same or different, saturated and linear and aliphatic alcohols having a total amount of carbon atoms from C6 to C30, preferably from C8 to C22, more preferably from C8 to C20 and most preferably from C8 to C18 in the alcohol substituent. Alternatively, the one or more phosphoric acid di-ester consists of an o-phosphoric acid molecule esterified with two alcohols selected from the same or different, saturated and branched and aliphatic alcohols having a total amount of carbon atoms from C6 to C30, preferably from C8 to C22, more preferably from C8 to C20 and most preferably from C8 to C18 in the alcohol substituent.

In one embodiment of the present invention, the one or more phosphoric acid di-ester is selected from the group comprising hexyl phosphoric acid di-ester, heptyl phosphoric acid di-ester, octyl phosphoric acid di-ester, 2-ethylhexyl phosphoric acid di-ester, nonyl phosphoric acid di-ester, decyl phosphoric acid di-ester, undecyl phosphoric acid di-ester, dodecyl phosphoric acid di-ester, tetradecyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof.

For example, the one or more phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof. In one embodiment of the present invention, the one or more phosphoric acid di-ester is 2-octyl-1-dodecylphosphoric acid di-ester.

In one embodiment of the present invention, the one or more phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octyl-1-dodecylphosphoric acid mono-ester and mixtures thereof and the one or more phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof.

For example, at least a part of the surface of the calcium carbonate-comprising filler material comprises a phosphoric acid ester blend of one phosphoric acid mono-ester and salty reaction products thereof and one phosphoric acid di-ester and salty reaction products thereof. In this case, the one phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester and 2-octyl-1-dodecylphosphoric acid mono-ester, the one phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester and 2-octal-1-dodecylphosphoric acid di-ester.

If at least a part of the surface of the calcium carbonate-comprising filler material comprises a phosphoric acid ester blend of one phosphoric acid mono-ester and salty reaction products thereof and one phosphoric acid di-ester and salty reaction products thereof, it is appreciated that the alcohol substituent of the one phosphoric acid mono-ester and the one phosphoric acid di-ester are preferably the same. For example, at least a part of the surface of the calcium carbonate-comprising filler material comprises a phosphoric acid ester blend of 2-ethylhexyl phosphoric acid mono-ester and salty reaction products thereof and 2-ethylhexyl phosphoric acid di-ester and salty reaction products thereof. Alternatively, at least a part of the surface of the calcium carbonate-comprising filler material comprises a phosphoric acid ester blend of 2-octyl-1-decyl phosphoric acid mono-ester and salty reaction products thereof and 2-octyl-1-decyl phosphoric acid di-ester and salty reaction products thereof. Alternatively, at least a part of the surface of the calcium carbonate-comprising filler material comprises a phosphoric acid ester blend of hexadecyl phosphoric acid mono-ester and salty reaction products thereof and hexadecyl phosphoric acid di-ester and salty reaction products thereof. Alternatively, at least a part of the surface of the calcium carbonate-comprising filler material comprises a phosphoric acid ester blend of octadecyl phosphoric acid mono-ester and salty reaction products thereof and octadecyl phosphoric acid di-ester and salty reaction products thereof. Alternatively, at least a part of the surface of the calcium carbonate-comprising filler material comprises a phosphoric acid ester blend of 2-octal-1-dodecylphosphoric acid mono-ester and salty reaction products thereof and 2-octyl-1-dodecylphosphoric acid di-ester and salty reaction products thereof.

In one embodiment of the present invention, at least a part of the surface of the calcium carbonate-comprising filler material comprises a phosphoric acid ester blend of two or more phosphoric acid mono-esters and salty reaction products thereof and two or more phosphoric acid di-ester and salty reaction products thereof. In this case, the two or more phosphoric acid mono-esters are selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decyl phosphoric acid mono-ester and 2-octyl-1-dodecylphosphoric acid mono-ester, the two or more phosphoric acid di-ester are selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decyl phosphoric acid di-ester and 2-octyl-1-dodecylphosphoric acid di-ester.

In one embodiment of the present invention, at least a part of the surface of the calcium carbonate-comprising filler material comprises a phosphoric acid ester blend of two phosphoric acid mono-esters and salty reaction products thereof and two phosphoric acid di-esters and salty reaction products thereof. For example, at least a part of the surface of the calcium carbonate-comprising filler material comprises a phosphoric acid ester blend of hexadecyl phosphoric acid mono-ester, octadecyl phosphoric acid mono-ester, hexadecyl phosphoric acid di-ester, octadecyl phosphoric acid di-ester and salty reaction products thereof and salty reaction products thereof.

According to one embodiment of the present invention, the phosphoric acid ester blend of the calcium carbonate-comprising filler material comprises the one or more phosphoric acid mono-ester and salty reaction products thereof to the one or more phosphoric acid di-ester and salty reaction products thereof in a specific molar ratio. In particular, the molar ratio of the one or more phosphoric acid mono-ester and salty reaction products thereof to the one or more phosphoric acid di-ester and salty reaction products thereof in the coating layer and/or the phosphoric acid ester blend can be from 1:1 to 1:100.

The wording "molar ratio of the one or more phosphoric acid mono-ester and salty reaction products thereof to the one or more phosphoric acid di-ester and salty reaction products thereof" in the meaning of the present invention refers to the sum of the molecular weight of the phosphoric acid mono-ester molecules and the sum of the molecular weight of the phosphoric acid mono-ester molecules in the salty reaction products thereof to the sum of the molecular weight of the phosphoric acid di-ester molecules and the sum of the molecular weight of the phosphoric acid di-ester molecules in the salty reaction products thereof.

According to one embodiment the molar ratio of the one or more phosphoric acid mono-ester and salty reaction products thereof to the one or more phosphoric acid di-ester and salty reaction products thereof in the phosphoric acid ester blend is from 1:1 to 1:100, preferably from 1:1.1 to 1:80, more preferably from 1:1.1 to 1:60, even more preferably from 1:1.1 to 1:40, still even more preferably from 1:1.1 to 1:20, and most preferably from 1:1.1 to 1:10.

Additionally or alternatively, the phosphoric acid ester blend of the treatment layer comprises the one or more phosphoric acid mono-ester and salty reaction products thereof in an amount of from 1 to 50 mol.-%, based on the molar sum of the one or more phosphoric acid mono-ester and salty reaction products thereof and the one or more phosphoric acid di-ester and salty reaction products thereof. For example, the phosphoric acid ester blend of the treatment layer comprises the one or more phosphoric acid mono-ester and salty reaction products thereof in an amount of from 10 to 45 mol.-%, based on the molar sum of the one or more phosphoric acid mono-ester and salty reaction products thereof and the one or more phosphoric acid di-ester and salty reaction products thereof.

According to one embodiment of the present invention,
I) the one or more phosphoric acid mono-ester consists of an o-phosphoric acid molecule mono-esterified with one alcohol molecule selected from unsaturated or saturated, branched or linear, aliphatic or aromatic alcohols having a total amount of carbon atoms from C6 to C30, preferably from C8 to C22, more preferably from C8 to C20, and most preferably from C8 to C18 in the alcohol substituent, and/or
II) the one or more phosphoric acid di-ester consists of an o-phosphoric acid molecule di-esterified with two alcohol molecules selected from the same or different, unsaturated or saturated, branched or linear, aliphatic or aromatic fatty alcohols having a total amount of carbon atoms from C6 to C30, preferably from C8 to C22, more preferably from C8 to C20, and most preferably from C8 to C18 in the alcohol substituent.

In one embodiment of the present invention, the phosphoric acid ester blend of the treatment layer further comprises one or more phosphoric acid tri-ester and/or phosphoric acid and salty reaction products thereof.

The term "phosphoric acid tri-ester" in the meaning of the present invention refers to an o-phosphoric acid molecule tri-esterified with three alcohol molecules selected from the same or different, unsaturated or saturated, branched or linear, aliphatic or aromatic alcohols having a total amount of carbon atoms from C6 to C30, preferably from C8 to C22, more preferably from C8 to C20 and most preferably from C8 to C18 in the alcohol substituent.

It is appreciated that the expression "one or more" phosphoric acid tri-ester means that one or more kinds of phosphoric acid tri-ester may be present on at least a part of the surface of the calcium carbonate-comprising filler material.

Accordingly, it should be noted that the one or more phosphoric acid tri-ester may be one kind of phosphoric acid tri-ester. Alternatively, the one or more phosphoric acid tri-ester may be a mixture of two or more kinds of phosphoric acid tri-ester. For example, the one or more phosphoric acid tri-ester may be a mixture of two or three kinds of phosphoric acid tri-ester, like two kinds of phosphoric acid tri-ester.

In one embodiment of the present invention, the one or more phosphoric acid tri-ester consists of an o-phosphoric acid molecule esterified with three alcohols selected from the same or different, unsaturated or saturated, branched or linear, aliphatic or aromatic alcohols having a total amount of carbon atoms from C6 to C30 in the alcohol substituent. For example, the one or more phosphoric acid tri-ester consists of an o-phosphoric acid molecule esterified with three alcohols selected from the same or different, unsaturated or saturated, branched or linear, aliphatic or aromatic fatty alcohols having a total amount of carbon atoms from C8 to C22, more preferably from C8 to C20 and most preferably from C8 to C18 in the alcohol substituent.

It is appreciated that the three alcohols used for esterifying the phosphoric acid may be independently selected from unsaturated or saturated, branched or linear, aliphatic or aromatic alcohols having a total amount of carbon atoms from C6 to C30 in the alcohol substituent. In other words, the one or more phosphoric acid tri-ester molecule may comprise three substituents being derived from the same alcohols or the phosphoric acid tri-ester molecule may comprise three substituents being derived from different alcohols.

In one embodiment of the present invention, the one or more phosphoric acid tri-ester consists of an o-phosphoric acid molecule esterified with three alcohols selected from the same or different, saturated and linear or branched and aliphatic alcohols having a total amount of carbon atoms from C6 to C30 in the alcohol substituent. For example, the one or more phosphoric acid tri-ester consists of an o-phosphoric acid molecule esterified with three alcohols selected from the same or different, saturated and linear or branched and aliphatic alcohols having a total amount of carbon atoms from C8 to C22, more preferably from C8 to C20 and most preferably from C8 to C18 in the alcohol substituent.

In one embodiment of the present invention, the one or more phosphoric acid tri-ester consists of an o-phosphoric acid molecule esterified with three alcohols selected from saturated and linear and aliphatic alcohols having a total amount of carbon atoms from C6 to C30, preferably from C8 to C22, more preferably from C8 to C20 and most preferably from C8 to C18 in the alcohol substituent. Alternatively, the one or more phosphoric acid tri-ester consists of an o-phosphoric acid molecule esterified with three alcohols selected from saturated and branched and aliphatic alcohols having a total amount of carbon atoms from C6 to C30, preferably from C8 to C22, more preferably from C8 to C20 and most preferably from C8 to C18 in the alcohol substituent.

In one embodiment of the present invention, the one or more phosphoric acid tri-ester is selected from the group comprising hexyl phosphoric acid tri-ester, heptyl phosphoric acid tri-ester, octyl phosphoric acid tri-ester, 2-ethylhexyl phosphoric acid tri-ester, nonyl phosphoric acid tri-ester, decyl phosphoric acid tri-ester, undecyl phosphoric acid tri-ester, dodecyl phosphoric acid tri-ester, tetradecyl phosphoric acid tri-ester, hexadecyl phosphoric acid tri-ester, heptylnonyl phosphoric acid tri-ester, octadecyl phosphoric acid tri-ester, 2-octyl-1-decylphosphoric acid tri-ester, 2-octyl-1-dodecylphosphoric acid tri-ester and mixtures thereof.

For example, the one or more phosphoric acid tri-ester is selected from the group comprising 2-ethylhexyl phosphoric acid tri-ester, hexadecyl phosphoric acid tri-ester, heptylnonyl phosphoric acid tri-ester, octadecyl phosphoric acid tri-ester, 2-octyl-1-decylphosphoric acid tri-ester, 2-octyl-1-dodecylphosphoric acid tri-ester and mixtures thereof.

In one embodiment of the present invention, at least a part of the surface of the calcium carbonate-comprising filler material comprises a phosphoric acid ester blend of one or more phosphoric acid mono-ester and salty reaction products thereof and one or more phosphoric acid di-ester and salty reaction products thereof and one or more phosphoric acid tri-ester and optionally phosphoric acid and salty reaction products thereof. For example, at least a part of the surface of the calcium carbonate-comprising filler material comprises a phosphoric acid ester blend of the one or more phosphoric acid mono-ester and salty reaction products thereof and one or more phosphoric acid di-ester and salty reaction products thereof and one or more phosphoric acid tri-ester and phosphoric acid and salty reaction products thereof.

Alternatively, at least a part of the surface of the calcium carbonate-comprising filler material comprises a phosphoric acid ester blend of the one or more phosphoric acid mono-ester and salty reaction products thereof and one or more phosphoric acid di-ester and salty reaction products thereof and optionally phosphoric acid and salty reaction products thereof. For example, at least a part of the surface of the calcium carbonate-comprising filler material comprises a phosphoric acid ester blend of the one or more phosphoric acid mono-ester and salty reaction products thereof and one or more phosphoric acid di-ester and salty reaction products thereof and phosphoric acid and salty reaction products thereof.

If at least a part of the surface of the calcium carbonate-comprising filler material comprises a phosphoric acid ester blend comprising one or more phosphoric acid tri-ester, it is preferred that the phosphoric acid ester blend comprises the one or more phosphoric acid tri-ester in an amount of ≤ 10 mol.-%, based on the molar sum of the one or more phosphoric acid mono-ester and salty reaction products thereof and the one or more phosphoric acid di-ester and salty reaction products thereof and one or more phosphoric acid tri-ester and the phosphoric acid and salty reaction products thereof . For example, the phosphoric acid ester blend comprises the one or more phosphoric acid tri-ester in an amount of ≤ 8 mol.-%, preferably of ≤ 6 mol.-%, and more preferably of ≤ 4 mol.-%, like from 0.1 to 4 mol.-%, based on the molar sum of the one or more phosphoric acid mono-ester and salty reaction products thereof and the one or more phosphoric acid di-ester and salty reaction products thereof and one or more phosphoric acid tri-ester and the phosphoric acid and salty reaction products thereof.

Additionally or alternatively, if at least a part of the surface of the calcium carbonate-comprising filler material comprises a phosphoric acid ester blend comprising phosphoric acid and salty reaction products thereof, it is preferred that the phosphoric acid ester blend comprises the phosphoric acid and salty reaction products thereof in an amount of ≤ 10 mol.-%, based on the molar sum of the one or more phosphoric acid mono-ester and salty reaction products thereof and the one or more phosphoric acid di-ester and salty reaction products thereof and one or more phosphoric acid tri-ester and the phosphoric acid and salty reaction products thereof. For example, the phosphoric acid ester blend comprises the phosphoric acid and salty reaction products thereof in an amount of ≤ 8 mol.-%, preferably of ≤ 6 mol.-%, and more preferably of ≤ 4 mol.-%, like from 0.1 to 4 mol.-%, based on the molar sum of the one or more phosphoric acid mono-ester and salty reaction products thereof and the one or more phosphoric acid di-ester and salty reaction products thereof and one or more phosphoric acid tri-ester and the phosphoric acid and salty reaction products thereof.

If the phosphoric acid ester blend further comprises phosphoric acid and salty reaction products thereof and one or more phosphoric acid tri-ester, it is thus preferred that the molar ratio of the phosphoric acid and salty reaction products thereof to the one or more phosphoric acid mono-ester and salty reaction products thereof to the one or more phosphoric acid di-ester and salty reaction products thereof to the one or more phosphoric acid tri-ester in the phosphoric acid ester blend is ≤ 10 mol.-% : ≤ 40 mol.-% : ≥ 40 mol.% : ≤ 10 mol.-%, based on the molar sum of the one or more phosphoric acid mono-ester and salty reaction products thereof and the one or more phosphoric acid di-ester and salty reaction products thereof and the one or more phosphoric acid tri-ester and the phosphoric acid and salty reaction products thereof.

The wording "molar ratio of the phosphoric acid and salty reaction products thereof to the one or more phosphoric acid mono-ester and salty reaction products thereof to the one or more phosphoric acid di-ester and salty reaction products thereof to the one or more phosphoric acid tri-ester" in the meaning of the present invention refers to the sum of the molecular weight of the phosphoric acid and the sum of the molecular weight of the phosphoric acid molecules in the salty reaction products thereof to the sum of the molecular weight of the phosphoric acid mono-ester molecules and the sum of the molecular weight of the phosphoric acid mono-ester molecules in the salty reaction products thereof to the sum of the molecular weight of the phosphoric acid di-ester molecules and the sum of the molecular weight of the phosphoric acid di-ester molecules in the salty reaction products thereof to the sum of the molecular weight of the phosphoric acid tri-ester molecules.

It is appreciated that the phosphoric acid ester blend may comprise salty reaction products obtained from contacting the calcium carbonate-comprising filler material with the one or more phosphoric acid mono-ester and one or more phosphoric acid di-ester and optionally phosphoric acid. In such a case, the phosphoric acid ester blend preferably comprises salty reaction products such as one or more strontium, calcium, magnesium and/or aluminium salts of phosphoric acid mono-esters and one or more calcium, magnesium and/or aluminium salts of phosphoric acid di-ester and optionally one or more strontium, calcium, magnesium and/or aluminium salts of phosphoric acid.

In one embodiment of the present invention, the one or more phosphoric acid mono-ester and/or the one or more phosphoric acid di-ester and optionally the phosphoric acid may be at least partially neutralized by one or more hydroxides of a mono- and/or bi- and/or trivalent cation and/or one or more salts of a weak acid of a mono- and/or bi- and/or trivalent cation before the at least one calcium carbonate-containing material is prepared. The one or more hydroxides of a bi- and/or trivalent cation may be selected from Ca(OH)₂, Mg(OH)₂, Al(OH)₃ and mixtures thereof.

Additionally or alternatively, if the one or more phosphoric acid mono-ester and/or the one or more phosphoric acid di-ester and optionally the phosphoric acid is at least partially neutralized by one or more hydroxides and/or one or more salts of a weak acid of a monovalent cation, the amount of monovalent cations is preferably ≤ 10 mol.-%, based on the molar sum of acidic groups in the one or more phosphoric acid mono-ester and the one or more phosphoric acid di-ester and optionally the phosphoric acid, the one or more hydroxide and/or the one or more salt of a weak acid of a monovalent cation to neutralize may be selected from LiOH, NaOH, KOH, Na₂CO₃, Li₂CO₃, K₂CO₃ and mixtures thereof.

In one embodiment of the present invention, the bivalent cations used for the partial neutralization of the one or more phosphoric acid mono-ester and/or the one or more phosphoric acid di-ester and optional the phosphoric acid are derived from salts of weak acids of such cations, preferably from carbonates and/or borates, such as calcium carbonate.

The term "weak acid" in the meaning of the present application refers to a Bronsted-Lowry acid, i.e. an H₃O⁺ -ion provider, featuring a pKₐ of > 2, preferably from 4 to 7.

Accordingly, the phosphoric acid ester blend of the treatment layer may further comprise salty reaction products such as one or more magnesium salts of phosphoric acid mono-esters and one or more magnesium salts of phosphoric acid di-ester and optionally one or more magnesium salts of phosphoric acid. Additionally or alternatively, the phosphoric acid ester blend of the treatment layer further comprises salty reaction products such as one or more aluminium salts of phosphoric acid mono-esters and one or more aluminium salts of phosphoric acid di-ester and optionally one or more aluminium salts of phosphoric acid. Additionally or alternatively, the phosphoric acid ester blend of the treatment layer further comprises salty reaction products such as one or more lithium salts of phosphoric acid mono-esters and one or more lithium salts of phosphoric acid di-ester and optionally one or more lithium salts of phosphoric acid. Additionally or alternatively, the phosphoric acid ester blend of the treatment layer further comprises salty reaction products such as one or more sodium salts of phosphoric acid mono-esters and one or more sodium salts of phosphoric acid di-ester and optionally one or more sodium salts of phosphoric acid. Additionally or alternatively, the phosphoric acid ester blend of the treatment layer further comprises salty reaction products such as one or more potassium salts of phosphoric acid mono-esters and one or more potassium salts of phosphoric acid di-ester and optionally one or more potassium salts of phosphoric acid.

If the one or more phosphoric acid mono-ester and/or the one or more phosphoric acid di-ester and optionally the phosphoric acid is at least partially neutralized by one or more hydroxides and/or one or more salts of a weak acid of a monovalent cation, the treatment layer and/or the phosphoric acid ester blend preferably comprises an amount of monovalent cations of ≤ 10 mol.-%, based on the molar sum of acidic groups in the one or more phosphoric acid mono-ester and the one or more phosphoric acid di-ester and optionally the phosphoric acid.

In one embodiment of the present invention, the phosphoric acid ester blend of the treatment layer may further comprise additional surface treatment agents that do not correspond to the one or more phosphoric acid mono-ester, one or more phosphoric acid di-ester and the optional one or more phosphoric acid tri-ester and/or phosphoric acid of the present invention. Such additional surface treatment agents are preferably at least one organic material such as a polysiloxane. For example, the polysiloxane is preferably a polydimethylsiloxane (PDMS).

The polysiloxane is preferably present in a quantity such that the total amount of said polysiloxane on at least a part of the surface of the calcium carbonate-comprising filler material is less than 1 000 ppm, more preferably less than 800 ppm and most preferably less than 600 ppm. For example, the total amount of the polysiloxane on at least a part of the surface of the calcium carbonate-comprising filler material is from 100 to 1 000 ppm, more preferably from 200 to 800 ppm and most preferably from 300 to 600 ppm, e.g. from 400 to 600 ppm.

In one embodiment of the present invention, the phosphoric acid ester blend of the treatment layer contains < 50 ppm of C6 to C30 carboxylic acids.

### The polymer binder

According to step b) of the process of the present invention, a polymer binder is provided. In the process of the present invention, the polymer binder is used to separate the single particles in the compacted material, and is not chemically bound to the surface of the at least one powder material.

According to one embodiment of the present invention, the polymer binder is selected from the group consisting of polyolefins, ethylene copolymers, e.g. ethylene-1-octene copolymers, metallocene based polypropylenes, polypropylene homo- or co-polymers, preferably amorphous polypropylene homopolymers, and combinations thereof. Preferably, the polymer binder is a polyolefin. According to a preferred embodiment of the inventive process, the polyolefin is selected from the group of homo- and/or copolymers of polyethylene, homo- and/ or copolymers of polypropylene, homo- and/or copolymers of polybutylene, or mixtures thereof. According to another preferred embodiment, the polymer binder is selected from the group consisting of polypropylene homopolymers, ethylene-1-octene copolymers, metallocene based polypropylenes, and mixtures thereof.

For the purpose of present invention the expression "metallocene based" means that during the manufacturing process of the polymer a metallocene catalyst, which is a single site catalyst, has been applied.

The polymer binder may be provided in solid form or molten form. According to one embodiment, the polymer binder is a solid polymer binder, for example, in form of granules or a powder. According to another embodiment, the polymer binder is a molten polymer binder.

It is appreciated that, irrespective whether the polymer binder is provided in solid or molten form, at some point of time during the preparation of the compacted material the polymer binder will be in a liquid form having a certain viscosity. According to one embodiment, the polymer binder has a rotational viscosity from 100 to 400 000 mPa·s, preferably from 1 000 to 100 000 mPa·s, and more preferably from 5 000 to 50 000 mPa·s, at 190°C. The rotational viscosity is measured by a rotational viscosimeter such as a rheometer from Anton Paar, model Physica MCR 300 Modular Compact rheometer, with a plate-plate system having a diameter of 25 mm, a gap of 0.2 mm and a shear rate of 5 s⁻¹.

According to one embodiment, the polymer binder is added in an amount from 1 to 50 wt.-%, based on the total weight of the compacted material, preferably from 2 to 40 wt.-%, more preferably from 3 to 25 wt.-%, and most preferably from 5 to 20 wt.-%. The process of the present invention also allows for use of extremely low concentrations of the polymer binder. According to one embodiment, the polymer binder is added in an amount from 1 to 10 wt.-%, based on the total weight of the compacted material, preferably from 2 to 8 wt.-%. This may further reduce or avoid any negative effects on a polymer composition, to which the compacted material may be added, and may increase the compatibility with the same.

### The process for producing a compacted material

According to the present invention, a process for producing a compacted material is provided, comprising the following steps:
a) providing at least one powder material,
b) providing a polymer binder,
c) simultaneously or subsequently feeding the at least one powder material of step a) and the polymer binder of step b) into a high speed mixer unit,
d) mixing the at least one powder material of step a) and the polymer binder of step b) in the high speed mixer unit until formation of a compacted material, and
e) reducing the temperature of the compacted material obtained from step d) below the melting point or glass transition temperature of the polymer binder,
wherein the at least one powder material comprises a surface-treated filler material product comprising a calcium carbonate-comprising filler material and a treatment layer on at least a part of the surface of the calcium carbonate-comprising filler material,
wherein the treatment layer comprises
i) at least one mono-substituted succinic anhydride and/or at least one mono-substituted succinic acid and/or salty reaction products thereof, and/or
ii) a phosphoric acid ester or blend of one or more phosphoric acid mono-ester and salty reaction products thereof and/or one or more phosphoric acid di-ester and salty reaction products thereof.

The process of the present invention may be carried out in form of a continuous process or a batch process.

According to one embodiment, the at least one powdered material provided in step a) has a temperature between 20°C and 300°C, and preferably between 60°C and 250°C.

According to one embodiment, the polymer binder provided in step b) is in solid form. According to another embodiment, the polymer binder provided in step b) is in molten form, preferably having a temperature above the melting point or glass transition temperature of the polymer binder. According to one embodiment the polymer binder has a temperature which is from 50°C to 300°C above the glass transition temperature of the polymer binder, if an amorphous polymer binder is used. According to another embodiment the polymer binder has a temperature which is from 10°C to 200°C above the melting point of the polymer binder, if the polymer binder is an at least partially crystalline polymer. For example, the polymer binder may have a temperature between 20°C and 300°C, preferably between 30°C and 270°C, more preferably between 40°C and 250°C, and most preferably between 50°C und 230°C.

According to the present invention, the at least one powder material of step a) and the polymer binder of step b) are fed into a high speed mixer unit. Suitable conveyor systems for feeding the components into the high speed mixer unit are known to the skilled person. For example, the feeding may be carried out by use of a pneumatic conveyor system, a vibrating conveyor system, a flexible conveyor system, a vertical conveyor system, a spiral conveyor system, or combinations of one or more of the foregoing systems.

Suitable high speed mixer units are also known to the skilled person. Examples of suitable high speed mixer units are single-screw high speed mixer, such as ring layer mixers available from the companies Lödige, Amixon, AVA-Huep or Zeppelin, or high speed batch mixers as available from the companies Henschel, Papenmeier, Mixaco, or Zepplin, or intensive mixer such as available by the companies Laeis or Eirich.

According to one embodiment, process step c) comprises simultaneously or subsequently feeding the at least one powder material of step a) and the polymer binder of step b) into a high speed mixer unit of a cylindrical treatment chamber. According to a preferred embodiment, the cylindrical treatment chamber contains one single-screw high speed mixer, in a horizontal or vertical position.

Especially useful in the present invention are conventional commercially available cylindrical treatment chambers containing a single-screw high speed mixer, having e.g. the following parameters: length 350 mm, diameter 90 mm, at 1 000 - 4 000 rpm; length 1 200 mm, diameter 230 mm, at 400 - 3 000 rpm; length 150 mm, diameter 150 mm, at 600 - 1 300 rpm. Preferably, the ratio length : diameter is from 1:1 to 6:1, more preferably from 2:1 to 5:1, especially 3:1 to 4:1.

In step d) of the inventive process, the at least one powder material of step a) and the polymer binder of step b) are mixed in the high speed mixer unit until formation of a compacted material.

The mixing may be carried out at a temperature from 100°C to 200°C, preferably from 120°C to 180°C, and more preferably at a temperature from 130°C to 160°C. The preferred circumferential mixing speed may be from 5 to 100 m/s, preferably from 7 to 80 m/s, more preferably from 10 to 50 m/s.

According to one embodiment, the polymer binder provided in step b) is a molten polymer binder, and in step d) the at least one powder material of step a) and the molten polymer binder of step b) are mixed in the high speed mixer unit until formation of a compacted material.

According to another embodiment, the polymer binder provided in step b) is a solid polymer binder, and in step d) the at least one powder material of step a) and the solid polymer binder of step b) are mixed in the high speed mixer unit until formation of a compacted material, wherein the mixing step is carried out at a temperature above the melting point or glass transition temperature of the polymer binder.

According to one embodiment the mixing step d) is performed at a temperature which is from 50°C to 300°C above the glass transition temperature of the polymer binder, if an amorphous polymer binder is used. According to another embodiment the mixing step d) is performed at a temperature which is from 10°C to 200°C above the melting point of the polymer binder, if the polymer binder is an at least partially crystalline polymer. For example, the mixing step d) may be carried out at a temperature from 100°C to 200°C, preferably from 120°C to 180°C, and most preferably from 130°C to 160°C.

According to the present invention, mixing step d) is carried out until formation of a compacted material. By compacted material, a bulk material is understood to consist of a conglomerate of a number of single particles forming a material with a weight median particle size *d*₅₀ ranging from 10 µm to 10 mm, measured by sieve analysis using the Retsch AS 200 sieve tower according to ISO 3310 standard.

In process step e) the temperature of the compacted material obtained from step d) is reduced below the melting point or glass transition temperature of the polymer binder. According to one embodiment, in process step e) the temperature of the compacted material obtained from step d) is reduced below the melting point of the polymer binder. According to another embodiment, in process step e) the temperature of the compacted material obtained from step d) is reduced below the glass transition temperature of the polymer binder.

The temperature of the compacted material obtained from step d) may be reduced by any method and means known to the skilled person. According to one embodiment, process step e) is carried out by transferring the compacted material obtained from step d) to a cooling unit. Examples for suitable cooling units are fluidized beds, or means which allow to cool down the compacted material via chilled surfaces.

According to an optional embodiment, a surface treatment agent is fed simultaneously with or after the feeding of the at least one powder material into the high speed mixer unit. The surface treatment agent may be liquid or liquefied, and may be preferably provided in the molten state.

The main difference between the surface treatment agent and the polymer binder is that the surface treatment agent is chemically bound to the at least one powder material. Preferably, the surface treatment agent serves, inter alia, to alter the surface tension of the powder material, and thus, the hydrophobicity thereof. On the other hand, as mentioned below, also waxes can be used as surface treatment agent, which are not chemically bound, but particularly serve to improve dispersion and especially reduce the viscosity of high viscosity polymer binders.

According to one embodiment the surface treatment agent is selected from the group comprising stearic acid, zinc oxide, synthetic paraffin wax, polyethylene metallocene wax, and polypropylene wax. According to one embodiment the temperature of the surface treatment agent is between 20°C and 300°C, preferably between 60°C and 250°C, and more preferably between 60°C and 120°C. However, the maximum temperature has to be below the decomposition temperature of any one of the ingredients.

It may furthermore be advantageous that before step e), i.e. before the temperature of the compacted material obtained from step d) is reduced below the melting temperature or glass transition temperature of the polymer binder, the compacted material of step d) is transferred to a second mixing unit. In this second mixing unit optionally further molten polymer binder can be added to and mixed with the compacted material of step d).

It has to be noted that conventional functional components like impact modifiers, stabilizers, etc. may be included during the mixing process, or to the finished compacted material, as well in the final product, i.e. the compounded thermoplastic resin.

### The compacted material

According to a further aspect of the present invention, a compacted material obtained by a process according to the present invention is provided.

Without being bound by any theory, the applicant believes that it is possible for the compacted material to be well dispersed in a polymer, i.e. without the formation of any agglomerates, using conventional single screw extrusion equipment due to the combination of two factors, namely the use of high speed mixers combined with the use of polymer binders, which are able to form thin layers around the singularised particles of the at least one powder material, which totally cover the particle surfaces resulting in a compacted material. "Well dispersed" means that dispersions, which are visually tested on extruded film under a binocular magnifier with magnification of 50 of each of the dispersions made, show no black spots corresponding to the matrix polymers nor white spots corresponding to the at least one powder material. The singularized and coated particles may then form loose conglomerates, but are still separated by the polymeric surface layers. This is the desired step of compaction. The result of the compaction is an increase in bulk density, an improvement of the flowability, and the suppression of dust as described in more detail below.

The inventors of the present invention also found that the use of a compacted material according to the present invention in the continuous production of a polymer composition leads to a decreased filter pressure value of the resulting polymer melt during production attesting a higher degree of dispersion as compared to the use of conventional masterbatches. A further advantage of the process of the present invention lies in the fact that it is a low cost manufacturing process resulting in lower cost end-product. This, inter alia, is due to the fact that the obtained compacted material is processable on a conventional single-screw plastics conversion equipment without the need to compound this surface treated material.

According to one embodiment the compacted material is processable on a single-screw plastics conversion equipment. Thus, conventional compounding processes such as those using twin-screws or Farrel continuous mixers, co-kneaders, Banbury batch-mixers, or other equivalent equipment can be eliminated.

According to one embodiment the compacted material is completely redispersible in a thermoplastic polymer composition without a compounding step. By "completely re-dispersible" it is understood that dispersions, which are visually tested on extruded film under a binocular magnifier with magnification of 50 of each of the dispersions made, show no black spots corresponding to the matrix polymers nor white spots corresponding to the powder material.

According to one embodiment the compacted material is non-dusting. Such non dusting compacted material, preferably has a screen residue of more than 80 wt.-%, preferably more than 90 wt.-% on a 45 µm screen according to ISO 3310 standard measured by sieve analysis using a Retsch AS 200 sieve tower.

According to one embodiment of the present invention, the content of the at least one powder material is from 50 to 99 wt.-%, preferably from 60 to 98 wt.-%, more preferably from 75 to 95 wt.-%, most preferably from 80 to 92 wt.-%, e.g. 87 to 90 wt.-%, based on the total weight of the compacted material.

The content of polymer binder in the compacted material may be from 1 to 50 wt.-%, preferably from 2 to 40 wt.-%, more preferably from 5 to 25 wt.-%, especially, from 8 to 14 wt.-%, e.g. from 10 to 13 wt.-%, based on the total weight of the compacted material.

If a surface treatment agent is used in the compacted material according to the present invention, its content may depend on the specific surface area of the at least one powder material. Advantageously, is present in an amount of from 0.01 to 10 wt.-%, preferably from 0.1 to 7 wt.-%, more preferably from 0.5 to 5 wt.-%, e.g. from 1 to 3 wt.-%, based on the total weight of the compacted material.

### Use of the compacted material

According to a further aspect of the present invention, a use of the compacted material according to the present invention as additive in a polymer composition is provided.

Due to its excellent dispersion properties, the compacted material of the present invention can be used as additive in a polymer composition in any concentration ranging from 0.1 to 80 wt.-%, preferably from 1 to 50 wt.-%, and more preferably from 5 to 30 wt.-%, based on the total weight of the polymer composition, without the need of preparing intermediate masterbatches also named concentrates and/or compounds for the formation of the polymeric end-products.

The compacted materials according to the present invention can also be used in a process for producing a polymer composition. According to one embodiment, a process for producing a polymer composition is provided, wherein a compacted material according to the present invention is added to at least one polymer. According to a preferred embodiment, the compacted material is added directly to the at least one polymer. However, it is also possible to subject the compacted material to further treatments, for example, a compounding step, before adding it to the at least one polymer.

The at least one polymer may comprise homopolymers, copolymers, such as, for example, block, graft, random and alternating copolymers, heterophasic copolymers and random heterophasic copolymers as well as polymer blends, modifications, or mixtures thereof. The at least one polymer can also comprise recycled polymer materials. The content of recycled polymers in the at least one polymer may be in the range from 0.01 to 100 wt.-%.

Preferably said at least one polymer may be selected from at least one thermoplastic polymer.

Such thermoplastic polymers suitable for the present invention may comprise without being limited to:
- Polymers from olefins and diolefins, for example, polyethylenes (LDPE, LLDPE, VLDPE, ULDPE, MDPE, HDPE, UHMWPE), polypropylene, polyisobutylene, poly-4-methyl-pentene-1, polybutadiene, polyisoprene, polycyclooctene, as well random or block copolymers, such as ethylene/but-1-ene copolymers, ethylene-hexene copolymers, ethylene-methylpentene copolymers, ethylene-octene copolymers, polypropylene-polyethylene (EP), EPM, EPDM, ethylene-vinylacetat (EVA), and ethylene-acrylic ester copolymers,
- Polystyrene, polymethylstyrene, styrene-butadiene copolymers (SB), styrene-butadiene-styrene (SBS) and its hydrogenated polymer (SEBS), Styrene-isoprene, styrene-isoprene-styrene (SIS), styrene-butadiene-acrylonitrile (ABS), styrene-acrylonitrile-acrylate (ASA), styrene-maleic anhydride, and grafted polymers, for example, styrene-grafted butadiene, maleic acid anhydride-grafted SBS, or grafted polymers from methylmethacrylate, styrene-butadiene and ABS (MABS),
- Halogen containing polymers such as polyvinylchloride, polychloroprene, polyvinylidene chloride, chlorinated polyethylene, or polytetrafluoroethylene,
- Polymers from unsaturated esters such as polyacrylates, or polymethacrylates, for example, polymethylmethacrylate, polyacrylonitrile, polyacrylamide, polybutylacrylate,
- Polymers derived from unsaturated alcohols such as polyvinylalcohol, polyvinylacetate, or polyvinylbutyral (PVB),
- Polyacetales, for example, polyoxymethylene and copolymers thereof,
- Polyphenylene oxide as well as polystyrene or polyamide blends thereof,
- Polyurethanes (PU), in particular linear polyurethanes (TPU),
- Polyamides (PA), such as PA-6, PA-6.6, PA-6.10, PA-4.6, PA-4.10, PA-6.12, PA-12.12, PA-11, PA-12 as well as partially aromatic polyamides (e.g. polyphthalamides),
- Polyimides, polyamidimides, polyetherimides, polyketones, polysulphones, polyethersulphones, and polyphenylensulphides,
- Polyethyleneterephthalate (PET), polybutyleneterephthalate (PBT), polypropyleneterephthalate, polyethylenenaphthylate,
- Polycarbonates,
- Cellulose derivatives, such as cellulose nitrate, cellulose acetate, or cellulose propionate,
- Partially or fully bio-based polymers derived from renewable biomass sources, such as vegetable fats and oils, corn starch, pea starch, or microbiota, aliphatic biopolyesters, such as polyhydroxyalkanoates (PHA), polyhydroxybutyrate (PHB), polyhydroxyvalerate (PHV), polyhydroxyhexanoate (PHH), or polyesters such as polylactic acid (PLA),
- Blends, mixtures, alloys and combinations comprising at least one of the above polymers.

According to one embodiment, the at least one polymer is a thermoplastic polymer being selected from the group consisting of homopolymers and/or copolymers of polyolefins, polyamides, polystyrenes, polyacrylates, polyvinyls, polyurethanes, halogen-containing polymers, polyesters, polycarbonates, and mixtures thereof.

According to one embodiment, the at least one polymer is a polyolefin being selected from the group of homo- and/or copolymers of polyethylene, homo- and/ or copolymers of polypropylene, homo- and/or copolymers of polybutylene, or mixtures thereof. According to another embodiment, the at least one polymer is a polyolefin comprising a polyethylene, a polypropylene, a polybutylene, or mixtures thereof. For example, the at least one polymer may be selected from the group comprising low density polyethylene (LDPE), linear low density polyethylene (LLDPE), high density polyethylene (HDPE), polypropylene (PP) such as polypropylene homopolymers, random polypropylene, heterophasic polypropylene or block copolymers including polypropylene units, polystyrene (PS), high impact polystyrene (HI-PS), and polyacrylate.

The at least one polymer optionally may comprise one or more additives which are well known to the skilled person. Such additives comprise, without being limited to, UV-absorbers, light stabilizers, processing stabilizers, antioxidants, heat stabilizers, nucleating agents, metal deactivators, impact modifiers, plasticizers, lubricants, rheology modifiers, processing aids, pigments, dyes, optical brighteners, antimicrobials, antistatic agents, slip agents, anti-block agents, coupling agents, dispersants, compatibilizers, oxygen scavengers, acid scavengers, markers, antifogging agents, surface modifiers, flame retardants, blowing agents, smoke suppressors, reinforcement agents, such as glass fibres, carbon fibres and/or glass bubbles, or mixtures of the foregoing additives.

According to a further aspect not forming part of the invention, a polymer composition comprising a compacted material according to the present invention is provided, said polymer composition being preferably a thermoplastic polymer composition. Said polymer composition may be obtained as a material having a defined shape, such as pellets, spheres, pearls, beads, prills, flakes, chips or slugs, or a non-defined shape, such as, for example, crumbles. Alternatively, the polymer composition may be a mixture of both defined and non-defined shape materials.

According to one embodiment not forming part of the invention, said polymer composition is used in a process for producing a polymer product. The polymer composition may be used in any process for producing a polymer product known to the skilled person. According to one embodiment not forming part of the invention, the process is selected from melt processing techniques, and preferably being selected from profile extrusion, cable extrusion, film extrusion, moulding, fibre spinning, co-kneading, or pultrusion. In this respect, the compacted material obtained by the process of the present invention can serve as an additive in the manufacture of blown films, sheets, pipe profiles, and in such processes like extrusion of pipes, profiles, cables fibres or the like, compression moulding, injection moulding, thermoforming, blow moulding, rotational moulding etc.

According to one embodiment not forming part of the invention, the compacted material and/or the polymer composition is used for producing a fibre, a filament, a thread, a woven material, a nonwoven material, a film, a profile, a cable, or a moulded product.

According to still a further aspect not forming part of the invention, a polymer product comprising a compacted material according to the present invention and/or a polymer composition is provided, wherein the product is a fibre, preferably for a carpet, a filament, a thread, a woven material, a nonwoven material, a film, preferably a blown film or a breathable film, a profile, a cable, or a moulded product.

Appropriate method conditions for preparing the aforementioned polymer products are commonly known to the skilled person and/or can be established by routine modifications based on common general knowledge. For example, the compacted material and/or the polymer composition may advantageously be implemented in a process of mixing and/or extruding and/or compounding and/or blow moulding for preparing a fibre, a filament, a thread, a woven material, a nonwoven material, a film, a profile, a cable, or a moulded product.

The term "fibre" refers to a linear structure forming textile fabrics such as wovens or nonwovens, which typically consist of fibre webs bonded together by e.g. mechanical methods. Accordingly, the term "fibre" is understood to refer to a finite structure.

The term "thread" refers to a linear structure forming textile fabrics such as nonwovens which typically consist of thread webs bonded together by e.g. mechanical methods. Accordingly, the term "thread" is understood to refer to a finite structure. The thread may be constructed as mono-, bi- or multi-thread. If a bi- or multi-thread is present, the composition of the single thread may be substantially the same. That is to say, the compositions of the single threads comprise substantially the same components in the same amounts. Alternatively, the composition of the single threads may be different. That is to say, the compositions of the single threads may comprise the same components in varying amounts or the compositions of the single threads may comprise different components in the same amounts or the composition of the single threads may comprise different components in varying amounts.

The term "filament" refers to a structure that differs from fibres by its structure length. Accordingly, the term "filament" is understood to refer to endless fibres. It is further appreciated that the filament may be constructed as mono-, bi- or multi-filament. If a bi- or multi-filament is present, the composition of the single filaments may be substantially the same. That is to say, the compositions of the single filaments comprise substantially the same components in the same amounts. Alternatively, the composition of the single filaments may be different. That is to say, the compositions of the single filaments may comprise the same components in varying amounts or the compositions of the single filaments may comprise different components in the same amounts or the composition of the single filaments may comprise different components in varying amounts.

The cross-section of the filaments and/or fibres and/or threads may have a great variety of shapes. It is preferred that the cross-sectional shape of the filaments and/or fibres and/or threads may be round, oval or n-gonal, wherein n is ≥ 3, e.g. n is 3. For example, the cross-sectional shape of the filaments and/or fibres and/or threads is round, approximately round or trilobal. Additionally or alternatively, the cross-sectional shape of the filaments and/or fibres and/or threads can be hollow.

As used herein, the term "textile article" refers to a product produced by methods such as by layering, plaiting, braiding, knotting, weaving, knitting, crocheting, or tufting. For present purpose, the term "woven material" refers to a textile article or fabric produced by weaving, and, the term "nonwoven material" refers to a flat, flexible, porous sheet structure that is produced by interlocking layers or networks of fibres, filaments, or film-like filamentary structures.

It is appreciated that the filaments and/or fibres and/or threads may be prepared by all techniques known in the art used for preparing such filaments and/or fibres and/or threads. For example, the filaments and/or fibres and/or threads can be prepared by the well-known melt-blown process, spunbonded process or staple fibre production.

In accordance with known technology such as the continuous filament spinning for yarn or staple fibre, and nonwoven processes such as spunbond production and meltblown production, the fibres and filaments can be formed by extrusion of the molten polymer through small orifices. In general, the fibres or filaments thus formed are then drawn or elongated to induce molecular orientation and affect crystallinity, resulting in a reduction in diameter and an improvement in physical properties.

Spunmelt is a generic term describing the manufacturing of nonwoven materials directly from thermoplastic polymer compositions. It encompasses 2 processes (spunlaid and meltblown) and the combination of both. In this process polymer granules are melted and molten polymer is extruded through a spinneret assembly which creates a plurality of continuous polymeric filaments. The filaments are then quenched and drawn, and collected to form a nonwoven web. Some remaining temperature can cause filaments to adhere to one another, but this cannot be regarded as the principal method of bonding. There are several methods available for forming the collected web of continuous filaments into a useful product by a bonding step, which includes, but is not be limited to calendering, hydroentangling, needling and/or bonding by means of chemicals or adhesives. Hydroentangling, also known as spunlacing, is a process which employs high pressure water jets to entangle fibres in a loose web thereby creating a fabric held together by frictional forces between the said fibres.

The spunlaid process (also known as spunbonded) has the advantage of giving nonwovens greater strength. Co-extrusion of second components is used in several spunlaid processes, usually to provide extra properties or bonding capabilities. In meltblown web formation, low viscosity polymers are extruded into a high velocity airstream on leaving the spinneret. This scatters the melt, solidifies it and breaks it up into a fibrous web.

It is known to those skilled in the art to combine processes or the fabrics from different processes to produce composite fabrics which possess certain desirable characteristics. Examples of this are combining spunbond and meltblown to produce a laminate fabric that is best known as SMS, meant to represent two outer layers of spunbond fabric and an inner layer of meltblown fabric. Additionally either or both of these processes may be combined in any arrangement with a staple fibre carding process or bonded fabrics resulting from a nonwoven staple fibre carding process. In such described laminate fabrics, the layers are generally at least partially consolidated by one of the bonding steps listed above.

Processes are well known in the art, and are commercially available, for producing spunbond fabrics. The two typical processes are known as the Lurgi process and the Reifenhäuser process. The Lurgi process is based on the extrusion of molten polymer through spinneret orifices followed by the newly formed extruded filaments being quenched with air and drawn by suction through Venturi tubes. Subsequent to formation, the filaments are disbursed on a conveyor belt to form a nonwoven web. The Reifenhäuser process differs from the Lurgi process in that the quenching area for the filaments is sealed, and the quenched air stream is accelerated, thus inducing more effective entrainment of the filaments into the air stream.

In the above-described systems, nonwoven materials are generally produced using polypropylene resins having a melt flow index of about 25 to 40 grams/10 minutes.

A "film" is a sheet or layer of material having a median thickness which is small compared to its length and width. For example, the term "film" may refer to a sheet or layer of material having a median thickness of less than 200 µm, but more than 1 µm.

According to one embodiment not forming part of the invention, the film is a breathable film. The term "breathable film" refers to a polymer film that allows the passage of gases and moisture vapour, for example, due to the presence of micropores. The "breathability" of a breathable film can be measured by its water vapour transmission rate (WVTR), which is specified in g/(m²·day). For example, a polymer film may considered as being "breathable" if it has a WVTR of at least 1000 g/(m²·day). The WVTR may be determined with a Lyssy L80-5000 measuring device according to ASTM E398.

It is appreciated that the films and/or breathable films may be prepared by all techniques known in the art used for preparing such films. For example, the films can be prepared by the well-known techniques used for preparing stretched or oriented films, and preferably extrusion coating films, blown films, technical blown films, monotapes, cast films and the like.

The inventors found that polymer products comprising a compacted material cause lower pressure decreases during film extrusion. In addition thereto, polymer products comprising a compacted material further show good mechanical properties such as tensile modulus, tensile test at yield and at break, elongation at break and tear resistance.

According to still another aspect not forming part of the invention, an article comprising a polymer product is provided, wherein the article is selected from the group consisting of healthcare products, geotextile products, agriculture products, horticulture products, clothing, footwear products, baggage products, household products, industrial products, packaging products, building products, upholstery products, industrial apparel, medical products, home furnishings like carpets, protective products, cosmetic products, hygiene products, filtration materials, and construction products.

According to one embodiment not forming part of the invention, the article is selected from the group consisting of flexible packaging for industrial and consumer applications, including roll stocks, bags, pouches, labels, wraps, liddings, shrink sleeves and stretch films; rigid packaging for industrial and consumer applications including plastic bottles, cups and containers; building and construction materials, including pipes and conduits, cladding and profiles, insulations, seals and gaskets, geotextiles; agriculture and horticulture materials including greenhouse materials, mulch films, tunnel, silage and bale wraps, boxes and crates; transportation and automotive applications including interior parts, such as instrument and door panels, consoles, pillars and seating; exterior parts, such as bumper fascia, fenders, tailgates as well as under the hood applications including air ducts, air intake manifolds, radiators and cooling hoses; electrical and electronic applications including CD players, DVD systems, personal computers and TV sets, notebooks, tablets, smartphones, cookers, refrigerators and freezers, washing machines, dishwashers, tools and office equipment; medical and health applications including disposable caps, gowns, masks, scrub suits and shoe covers, drapes, wraps and packs, sponges, dressings and wipes, bed linen, contamination control gowns, examination gowns, lab coats, isolation gowns, diagnostic medical machinery and medical devices; personal care products including absorbent hygiene products (AHP), baby diapers, feminine hygiene products and adult incontinence products, wipes, skin care products, depilatory strips; household and furniture products, including wood composites, decorative foils, floor coverings, flooring, kitchen ware, cleaners, pet care, lawn and garden articles; toys, sports and leisure articles including playhouses, building kits, play vehicles, sports and fitness devices, shoes, clothing and sportswear, safety equipment (helmets, kneepads), sports equipment, and suit cases.

### Examples

### 1. Measurement methods

In the following, measurement methods implemented in the examples are described.

### Ash content

The ash content in wt.-% of a compacted material sample, based on the total weight of the sample, was determined by incineration of a sample in an incineration crucible which was put into an incineration furnace at 570°C for 2 hours. The ash content was measured as the total amount of remaining inorganic residues.

### Linear density (dtex)

The titer or linear density expressed in dtex is measured according to EN ISO 2062 and corresponds to the weight in grams of 10 000 m yarn. A sample of 25 or 100 meters was wound up on a standard reel under a pretension of 0.5 cN/tex and weighted on an analytical scale. The grams per 10 000 m yarn length were then calculated.

### Fabric weight

Fabric weight or mass per unit area [g/m²] was measured according to EN ISO 9864.

### Tenacity, elongation at break, and tensile strength of fibres and nonwoven fabrics

Tenacity was calculated from the breaking force and the linear density, and expressed in centinewton per tex [cN/tex]. The test was carried out on a dynamometer with a constant stretching speed, applicable standards for this test are EN ISO 5079 and ASTM D 3822.

The breaking force is the force needed to be applied on a yarn to make it break. It is expressed in Newton [N]. The elongation at break is the increase of the length produced by stretching a yarn to its breaking point. It is expressed as a percentage [%] of its initial length.

Tensile strength expressed in kN/m and the elongation at maximum load expressed in % were measured in machine direction (MD) and in cross machine direction (CD). The energy value according to EN ISO 10319 was calculated by the tensile strength (MD + CD)/2.

### Static puncture resistance (CBR test) of nonwoven fabrics

Static puncture resistance expressed in kN was measured according to EN ISO 12236. This method specifies the determination of the puncture resistance by measuring the force required to push a flat-ended plunger through geosynthetics.

### Rotational viscosimetry

The rotational viscosity was measured by a rheometer from Anton Paar, Austria, model Physica MCR 300 Modular Compact rheometer, with a plate-plate system having a diameter of 25 mm, a gap of 0.2 mm and a shear rate of 5 s⁻¹.

### Filter pressure value (FPV)

The filter pressure test was performed on a commercially available Collin Pressure Filter Test Teach-Line FT-E20T-IS. The test method was performed in agreement with European Standard EN 13900-5 with each of the corresponding polymer compositions (16 g effective calcium carbonate per 200 g of final sample, diluent: LLDPE ExxonMobil LL 1001 VX) using a 14 µm type 30 filter (GKD Gebr. Kufferath AG, Düren, Germany), wherein no melt pump was used, the extruder speed was kept at 100 rpm, and wherein the melt temperature was 225 to 230°C (temperature setting: 190°C/210°C/230°C/230°C/230°C).

### Yield stress of blown or breathable films

Yield stress determination was performed according to ISO 527-3. The film specimen width was 15 mm and the testing length 5 cm.

### Yield elongation of blown or breathable films

Yield stress determination was performed according to ISO 527-3. The film specimen width was 15 mm and the testing length 5 cm.

### Tensile E-modulus of blown or breathable films

Yield stress determination was performed according to ISO 527-3. The film specimen width was 15 mm and the testing length 5 cm. The E-modulus corresponded to the inclination of the tensile test curve between the points at 0.02 % and 2 % of elongation.

### Visual evaluation of the blown films

Film samples have been put under a light microscope. Calcium carbonate agglomerates appeared black upon illumination from below and white upon illumination from above.

### Visual evaluation of the breathable films

The evaluation is done visually during the processing of the breathable film without any auxiliary means for enlargement. The rating "ok" means that no holes, no pinholes, and no stripes were observed.

### Dart drop test of blown film

Measurement was performed according to ASTMD 1709A.

### Water vapour transmission rate (WVTR) of breathable film

The WVTR value of the breathable films was measured with a Lyssy L80-5000 (PBI-Dansensor A/S, Denmark) measuring device according to ASTM E398.

### Hydrostatic pressure test of blown or breathable films

The hydrostatic pressure test has been carried out according to a procedure which is equivalent to AATCC Test Method 127-2013, WSP 80.6 and ISO 811. A film sample (test area = 10 cm²) was mounted to form a cover on the test head reservoir. This film sample was subjected to a standardized water pressure, increased at a constant rate until leakage appears on the outer surface of the film, or water burst occurs as a result of film failure (pressure rate gradient = 100 mbar/min.). Water pressure was measured as the hydrostatic head height reached at the first sign of leakage in three separate areas of the film sample or when burst occurs. The head height results were recorded in centimetres of water or millibars pressure on the specimen. A higher value indicated greater resistance to water penetration. The TEXTEST FX-3000, Hydrostatic Head Tester (Textest AG, Switzerland), was used for the hydrostatic pressure measurements.

### 2. Materials

### Powder material

CC1 (inventive): Natural ground calcium carbonate, commercially available from Omya International AG, Switzerland (*d*₅₀: 1.7 µm; *d*₉₈: 6 µm), surface-treated with 0.7 wt.-% alkenyl succinic anhydride (CAS [68784-12-3], concentration > 93%), based on the total weight of the ground calcium carbonate. BET: 3.4 g/m², residual moisture content: 0.1 wt.-%, moisture pick-up: 0.58 mg/g.

CC2 (comparative): Natural ground calcium carbonate, commercially available from Omya International AG, Switzerland (*d*₅₀: 1.7 µm; *d*₉₈: 6 µm), surface-treated with 1 wt.-% stearic acid (commercially available from Sigma-Aldrich, Croda, USA) based on the total weight of the ground calcium carbonate. BET: 3.4 g/m², residual moisture content: 0.1 wt.-%, moisture pick-up: 0.38 mg/g.

CC3 (comparative): Natural ground calcium carbonate, commercially available from Omya International AG, Switzerland (*d*₅₀: 1.7 µm; *d*₉₈: 6 µm), surface-treated with 0.55 wt.-% octanoic acid (product number 00040, commercially available from TCI Europe N.V, Belgium) based on the total weight of the ground calcium carbonate. BET: 3.4 g/m², residual moisture content: 0.1 wt.-%, moisture pick-up: 0.41 mg/g.

### Polymer binder

Binder A: Homo-polypropylene (Borflow HL 520FB), MFR = 2 000 g/10 min (230°C, 2.16 kg, ISO 1133) according to technical data sheet, rotational viscosity = 20 000 mPa·s at 190°C, commercially available from Borealis, Austria.
Binder B: Ethylene-1-octene-copolymer (Affinity GA 1900), density (ASTM D792) = 0.87 g/cm³, according to technical data sheet, rotational viscosity = 8 500 mPa·s at 190°C, commercially available from The Dow Chemical Company, USA.
Binder C: Metallocene based polypropylene wax (Licocene PP-1302), density (23°C; ISO 1183) = 0.87 g/cm³, according to technical data sheet, rotational viscosity = 130 mPa·s at 190°C, commercially available from Clariant International Ltd., Switzerland.

### Thermoplastic polymer

Polymer D: Homo-polypropylene (Moplen HP 561R), MFR = 25 g/10 min (230°C, 2.16 kg, ISO 1133) according to technical data sheet, commercially available from LyondellBasell, Netherlands.
Polymer E: Homo-polypropylene (PP HF420FB), MFR = 19 g/10 min (230°C, 2.16 kg, ISO 1133) according to technical data sheet, commercially available from Borealis, Austria.
Polymer F: Linear low density polyethylene (Dowlex NG 5056G), MFR = 1.1 g/10 min (190°C, 2.16 kg, ISO 1133), density (23°C; ISO 1183) = 0.919 g/cm³, according to technical data sheet, available from Dow, Switzerland.
Polymer G: Linear low density polyethylene (Dowlex 2035), MFR = 6 g/10 min (190°C, 2.16 kg, ISO 1133), density (23°C; ISO 1183) = 0.919 g/cm³, according to technical data sheet, available from The Dow Chemical Company, USA.
Polymer H: Low density polyethylene (Dow SC 7641), MFR = 2 g/10 min (190°C, 2.16 kg, ISO 1133), density (23°C; ISO 1183) = 0.923 g/cm³, according to technical data sheet available from The Dow Chemical Company, USA.

### 3. Examples

### Example 1 - Preparation of compacted material for multifilaments

A horizontal "Ring-Layer-Mixer/Pelletizer", namely "Amixon RMG 30" with process length of 1 200 mm, and diameter of 230 mm, equipped with 3 feeding ports in sequence, and 1 outlet port, was used. The cylinder was fitted with a heating/cooling double wall. Mixing and compacting was obtained by a rotating, cylindrical, pin-fitted screw.

The powder material CC1 was fed gravimetrically into the first feed port at a rate of 22.6 kg/h. The polymer binder or polymer binder blend was injected in liquid state at a temperature of 230°C through feeding port 2 at a rate of 2.4 kg/h.

The employed amounts of powder material CC1 and the type and amounts of the polymer binders are indicated in Table 1 below.

Mixing and compacting of the powder material and the polymer binder or polymer binder blend was carried out in the "Ring-Layer-Mixer/Pelletizer" at 180°C and a screw speed of 800 rpm.

The mixture left the mixer/pelletizer through the outlet port, was transferred by gravity into a second Ring-Layer-Mixer/Pelletizer for compacting and cooling, operated at a temperature of 140°C and a screw speed of 400 rpm. In this example, both units were of identical size and dimensions. The resulting compacted material left the unit through the outlet port, and was free of dust and free flowing.

**Table 1: Compositions and properties of prepared compacted materials CM1 to CM3 (wt.-% is based on total weight of the compacted material).**

| | CM1 | CM2 | CM3 |
|---|---|---|---|
| CC1 [wt.-%] | 88.0 | 88.0 | 88.0 |
| Binder A [wt.-%] | -- | 9.6 | 12.0 |
| Binder B [wt.-%] | 12.0 | -- | -- |
| Binder C [wt.-%] | -- | 2.4 | -- |
| Ash content [wt.-%] | 87.2 | 87.5 | 87.7 |

### Example 2 - Preparation of multifilament fibres

Different amounts of the compacted materials CM1 to CM3 produced according to Example 1 were mixed with polymer D. Multifilaments were produced from the obtained mixtures using a Collin Multifilament Lab Line CMF 100 (Dr. Collin GmbH, Germany), equipped with a single screw extruder with melt pump and spinneret diameter 50 mm with 34 filaments having a diameter of 0.3 mm. The spinning system was also equipped with a cooling chamber for quenching the multifilament fibre and stretching godets and a winder. Limanol B29 (commercially available from Schill+Seilacher GmbH, Germany) was used as spinning oil. The draw ratio was 2 for samples 1 to 8. The following godet roll temperatures were used, godet 1: 80°C, godet 2: 85°C, godet 3: 90°C, and godet 4: 90°C.

For comparison, a standard type masterbatch (MB1) containing 70 wt.-% CC1 was produced on industrial scale. The precise filler content of the masterbatch was determined by the ash content which was 72.2 wt.-%. The melt flow rate (MFR, 230°C, 2.16 kg, ISO 1133) of the masterbatch was 9.13 g/10 min.

The compositions of the produced multifilaments are compiled in Table 2 below.

The mechanical properties (elongation at break and tenacity) of the testing samples were determined as described above. The results of the mechanical tests are also shown in Table 2 below.

**Table 2: Composition and mechanical properties of the produced multifilaments (wt.-% is based on total weight of the compacted material).**

| Sample | Compacted material/ masterbatch | Content of CC1 in fibres [wt.-%] | Melt pressure extrusion [bar] | Tenacity [cN/dtex] | Elongation at break [%] |
|---|---|---|---|---|---|
| 1 (comp.) | MB1 | 21.2 | 40.5 | 0.72 | 183 |
| 2 | CM1 | 18.5 | 22.8 | 0.80 | 206 |
| 3 | CM2 | 16.3 | 23.8 | 0.82 | 198 |
| 4 | CM3 | 17.6 | 21.9 | 0.84 | 201 |
| 5 (comp.) | MB1 | 38.9 | 40.7 | 0.50 | 201 |
| 6 | CM1 | 34.6 | 24.3 | 0.40 | 170 |
| 7 | CM2 | 37.7 | 28.3 | 0.40 | 114 |
| 8 | CM3 | 45.4 | 35.6 | 0.30 | 155 |

The results shown in Table 2 above, reveal that multifilaments comprising a compacted material according to the present invention can be produced in good quality and mechanical properties with different powder material amounts. Furthermore, it can be gathered from Table 2 that the samples comprising the inventive compacted material show a reduced melt pressure during extrusion compared to the samples containing the comparative masterbatch. A reduced melt pressure is advantageous with respect to the processability of the material and indicates an improved dispersion of the powder material within the polymer matrix. In addition the mechanical properties of the multifilaments improve when a compacted material is applied as starting material for the spinning process.

### Example 3 - Preparation of compacted material for nonwoven fabrics

A horizontal "Ring-Layer-Mixer/Pelletizer", namely "Amixon RMG 30" with process length of 1 200 mm, and diameter of 230 mm, equipped with 3 feeding ports in sequence, and 1 outlet port, was used. The cylinder was fitted with a heating/cooling double wall. Mixing and compacting was obtained by a rotating, cylindrical, pin-fitted screw.

The powder material CC1 or CC2, respectively, was fed gravimetrically into the first feed port at a rate of 22.6 kg/h. The polymer binder or polymer binder blend was injected in liquid state at a temperature of 230°C through feeding port 2 at a rate of 2.4 kg/h.

The employed types and amounts of the powder materials and polymer binders are indicated in Table 3 below.

Mixing and compacting of the powder material and the polymer binder or polymer binder blend was carried out in the "Ring-Layer-Mixer/Pelletizer" at 180°C and a screw speed of 800 rpm.

The mixture left the mixer/pelletizer through the outlet port, was transferred by gravity into a second Ring-Layer-Mixer/Pelletizer for compacting and cooling, operated at a temperature of 140 °C and a screw speed of 400 rpm. In this example, both units were of identical size and dimensions. The resulting compacted material left the unit through the outlet port, and was free of dust and free flowing.

**Table 3: Compositions and properties of prepared compacted materials CM4 to CM9 (wt.-% is based on total weight of the compacted material, nm = not measured).**

| | CM4 | CM5 | CM6 | CM7 | CM8 | CM9 |
|---|---|---|---|---|---|---|
| CC1 [wt.-%] | 88.0 | 88.0 | 88.0 | -- | 88.5 | 88.5 |
| CC2 [wt.-%] | -- | -- | -- | 87.0 | -- | -- |
| Binder A [wt.-%] | -- | 12.0 | 10.8 | 13.0 | 11.5 | -- |
| Binder B [wt.-%] | 12.0 | -- | 1.2 | -- | -- | 9.2 |
| Binder C [wt.-%] | -- | -- | -- | -- | -- | 2.3 |
| Ash content [wt.-%] | 87.1 | 87.5 | 87.3 | 86.0 | nm | nm |

### Example 4 - Preparation of nonwoven fabrics

Different amounts of the compacted materials according to the present invention were mixed with polymer E and were directly dosed together into a single screw extruder equipped with a melt pump. Nonwoven fabrics were produced from these mixtures on a pilot nonwoven Lurgi line. Extruder temperatures were between 230°C and 250°C. The four spin beams were equipped with melt pumps and spinnerets which contained 600 orifices each with a diameter of 0.8 mm. The extruded filaments were formed into a nonwoven web. The conveyor belt speed was adjusted to 20 meters/minute and hydroentangling was used for bonding the nonwoven web. The final bonded nonwoven web with a width of 100 cm had a target fabric weight of 385 g/m².

The compositions of the produced nonwoven materials are compiled in Table 4 below.

**Table 4: Compositions of the prepared nonwoven fabrics (wt.-% is based on total weight of the sample).**

| Sample | Compacted material | Content of CC1 or CC2 (ash content) [wt.-%] |
|---|---|---|
| 9 (comparative) | -- | 0 |
| 10 | CM5 | 0.9 |
| 11 | CM5 | 2.7 |
| 12 | CM8 | 2.5 |
| 13 | CM8 | 3.1 |
| 14 (comparative) | CM7 | 5.7 |
| 15 | CM6 | 3.0 |
| 16 | CM9 | 2.3 |

The mechanical properties of the testing samples were determined using the corresponding tests described above. The results of the mechanical tests are also shown in Table 5 below.

**Table 5: Properties of the produced nonwoven fabrics.**

| Sample | Linear density fibres [dtex] | Tenacity fibres [cN/dtex] | Fabric weight [g/m²] | Coefficient CBR [N/g] | CBR [N] | Tensile strength (MD+CD)/2 [N/g] |
|---|---|---|---|---|---|---|
| 9 (comp.) | 10.1 | 2.22 | 378 | 6.8 | 2570 | 10.2 |
| 10 | 9.2 | 2.29 | 366 | 7.6 | 2788 | 10.2 |
| 11 | 8.7 | 2.17 | 379 | 7.2 | 2743 | 8.9 |
| 12 | 9.2 | 2.14 | 393 | 7.0 | 2732 | 9.0 |
| 13 | 9.4 | 2.13 | 390 | 7.0 | 2743 | 7.9 |
| 14 (comp.) | 9.5 | 2.03 | 393 | 6.3 | 2493 | 7.9 |
| 15 | 8.9 | 2.14 | 377 | 6.9 | 2597 | 8.7 |
| 16 | 9.0 | 2.09 | 385 | 6.8 | 2636 | 8.5 |

As can be seen from the results compiled in Table 5, nonwoven fabrics comprising the inventive compacted material can be produced in good quality with improved mechanical properties compared to the unfilled nonwoven fabric (sample 9). Moreover, the nonwoven fabric comprising the compacted material using a powder with a treatment layer according to the invention have better mechanical properties than nonwoven fabrics comprising a compacted material using a powder with a different treatment layer (see sample 14).

### Example 5 - Preparation of compacted material for blown films

A horizontal "Ring-Layer-Mixer/Pelletizer", namely "Amixon RMG 30" with process length of 1 200 mm, and diameter of 230 mm, equipped with 3 feeding ports in sequence, and 1 outlet port, was used. The cylinder was fitted with a heating/cooling double wall. Mixing and compacting was obtained by a rotating, cylindrical, pin-fitted screw.

The powder material CC1 or CC3, respectively, was fed gravimetrically into the first feed port at a rate of 22.6 kg/h. The polymer binder or polymer binder blend was injected in liquid state at a temperature of 230°C through feeding port 2 at a rate of 2.4 kg/h.

The employed types and amounts of the powder materials and polymer binders are indicated in Table 6 below.

Mixing and compacting of the powder material and the polymer binder or polymer binder blend was carried out in the "Ring-Layer-Mixer/Pelletizer" at 180°C and a screw speed of 800 rpm.

The mixture left the mixer/pelletizer through the outlet port, was transferred by gravity into a second Ring-Layer-Mixer/Pelletizer for compacting and cooling, operated at a temperature of 140°C and a screw speed of 400 rpm. In this example, both units were of identical size and dimensions. The resulting compacted material left the unit through the outlet port, and was free of dust and free flowing.

**Table 6: Compositions and properties of prepared compacted materials CM10 and CM11 (wt.-% is based on total weight of the compacted material).**

| | CM10 | CM11 (comparative) |
|---|---|---|
| CC1 [wt.-%] | 88.5 | - |
| CC3 [wt.-%] | - | 87.5 |
| Binder A [wt.-%] | - | - |
| Binder B [wt.-%] | 8.6 | 9.4 |
| Binder C [wt.-%] | 2.9 | 3.1 |
| Ash content [wt.-%] | 87.7 | 86.6 |

### Example 6 - Manufacture of blown film samples

A blown film was produced using 77.1 wt.-% of Polymer F and 22.9 wt.-% of CM11 (BF1 = comparative example). Furthermore, a blown film was produced using 77.4 wt.-% of polymer F and 22.6 wt.-% of CM10 (BF2 = inventive example). Films were produced on a Dr. Collin blown film extrusion line (60 mm circular die, 1.2 mm die gap, 30 mm screw diameter, L/D ratio = 30, screw with mixing element). The films were processed with a BUR (blow up ratio) of 2.2 and the frost line high was kept at 16 cm high (distance from die).

The extruder had the following configuration:

**Table 7: Extrusion parameters.**

| | BF1 (comparative) | BF2 (inventive) |
|---|---|---|
| Temperature Zone 1 [°C] | 170 | 170 |
| Temperature Zone 2 [°C] | 195 | 195 |
| Temperature Zone 3 [°C] | 215 | 215 |
| Temperature Zone 4 [°C] | 215 | 215 |
| Temperature Zone 5 [°C] | 215 | 215 |
| Output [kg/h] | 4.5 | 4.5 |
| Screw Speed [rpm] | 50 | 50 |
| Die pressure [bar] | 204 | 81 |
| Torque [A] | 5.5 | 4.9 |

Extruder speed was kept constantly at 50 rpm and the average film grammage was set to 35 g/m² by appropriate adjustment of the line speed. Also the cooling air flow was adjusted accordingly to keep the frost line at the same position.

### Material and mechanical properties of blown film samples:

**Table 8: Material and mechanical properties of blown film samples BF1 and BF2.**

| Blown film sample | Direction | BF1 (comparative) | BF2 (inventive) |
|---|---|---|---|
| Yield stress [N·mm⁻²] | MD | 10.4 | 9.8 |
| | CD | 9.6 | 10.8 |
| Yield elongation [%] | MD | 11.1 | 11.0 |
| | CD | 7.4 | 7.5 |
| Tensile modulus [N·mm⁻²] | MD | 295 | 248 |
| | CD | 301 | 321 |
| Dart drop fall weight [g] | - | 858 | 816 |
| Visual evaluation of film | - | (-) | (+) |
| Ash content [wt.-%] | - | 21.0 | 19.5 |
| Film thickness [µm] | - | 36 | 36 |

| | | | |
|---|---|---|---|
| (-): many agglomerates, (+): no agglomerates, MD = machine direction, CD = cross direction (direction for the manufacturing of the blown film). | | | |

As can be gathered from Table 8 the mechanical properties of the blown films manufactured with a compacted material according to the invention and the comparative blown films are approximately equal. However, the blown films according to the invention are superior in view of their optical properties (no agglomerates have been observed), and their processing properties (see Table 7, lower die pressure and torque). The improvement of the processing properties allows to conduct the manufacturing process in a more energy and cost efficient manner.

### Example 7 - Preparation of compacted material for breathable films

A horizontal "Ring-Layer-Mixer/Pelletizer", namely "Amixon RMG 30" with process length of 1 200 mm, and diameter of 230 mm, equipped with 3 feeding ports in sequence, and 1 outlet port, was used. The cylinder was fitted with a heating/cooling double wall. Mixing and compacting was obtained by a rotating, cylindrical, pin-fitted screw.

The powder material CC1 or CC3, respectively, was fed gravimetrically into the first feed port at a rate of 22.6 kg/h. The polymer binder or polymer binder blend was injected in liquid state at a temperature of 230°C through feeding port 2 at a rate of 2.4 kg/h.

The employed types and amounts of the powder materials and polymer binders are indicated in Table 9 below.

Mixing and compacting of the powder material and the polymer binder or polymer binder blend was carried out in the "Ring-Layer-Mixer/Pelletizer" at 180°C and a screw speed of 800 rpm.

The mixture left the mixer/pelletizer through the outlet port, was transferred by gravity into a second Ring-Layer-Mixer/Pelletizer for compacting and cooling, operated at a temperature of 140°C and a screw speed of 400 rpm. In this example, both units were of identical size and dimensions. The resulting compacted material left the unit through the outlet port, and was free of dust and free flowing.

**Table 9: Compositions and properties of prepared compacted materials CM12 and CM13 (wt.-% is based on total weight of the compacted material).**

| | CM12 | CM13 (comparative) |
|---|---|---|
| CC1 [wt.-%] | 88 | - |
| CC3 [wt.-%] | - | 87 |
| Binder B [wt.-%] | 9.6 | 10.4 |
| Binder C [wt.-%] | 2.4 | 2.6 |

### Example 8 - Preparation of breathable films

Breathable films were produced by a pilot-extrusion cast-film line with integrated MDO-II unit (Dr. Collin GmbH, Germany) the extruder temperature settings were 195°C-210°C-230°C-230°C, and the rotation speed of the extruder was approximately 35 rpm using CM12 and CM13. The roller speed of the stretching unit was 125/125%.

CM12 and CM13 were pre-dried for 4 hours at 80°C. CM 12 (= inventive example) was dosed together with Polymer G and Polymer H (weight ratio 9:1, 9 weight parts polymer G) in the extrusion funnel using a gravimetric weigh feeder to obtain a calcium carbonate content of 50 wt.-% (=57.5 wt.-% CM12). CM 13 (= comparative example) was dosed together with Polymer G and H (weight ratio 9:1, 9 weight parts polymer G) in the extrusion funnel using a gravimetric weigh feeder to obtain a calcium carbonate content of 50 wt.-% (=56.8 wt.-% CM13).

The extrusion pressure increased when using CM12 (comprising CC1) within 1 hour from 38 to 42 bar, whereas when using CM13 (comprising CC3) the extrusion pressure increased from 48 to 161 bar.

The film quality of the obtained breathable films was inspected visually and the films were tested regarding their water vapour transmission rate (WVTR) and their hydrostatic pressure. The results are shown in Table 10 below.

**Table 10: Compositions and properties of prepared breathable films.**

| Sample | Compacted material | Film quality | WVTR (g/cm²·day) | Hydrostatic pressure (mbar) |
|---|---|---|---|---|
| 17 | CM12 | Ok | 4220 | 277 |
| 18 (comparative) | CM13 | Ok | 3750 | 235 |

The results shown in Table 10 confirm that the inventive breathable film has a good quality and breathability, which is superior to the comparative breathable film. Moreover, with the coating according to present invention a higher filler load was possible. In the comparative example (= CM13) a lower filler load was necessary to obtain good dispersion.

### Example 9 - Preparation of compacted material for evaluation of the degree of dispersability

For the powder treatment a high speed batch mixer from MTI-Mischtechnik Industrieanlagen GmbH Type LM 1.5/2.5/5 with a 2.5 L vessel and with a three part standard mixing tool was used. The mixer was heated to 175°C, and 364 g of a calcium carbonate (CC1 or CC3) were filled in the vessel. The vessel was closed and the mixer was run for 2 minutes at 700 rpm. Then the mixer was opened and 32 g of a polypropylene homopolymer with a solid density of 0.86 g/ml and a melting point (DSC) of 152°C was added to the preheated powder. The mixer was closed again and run for 12 minutes at 700 rpm.

To test the dispersion of the obtained treated powder a Dr. Collin lab extruder FT - E20T - IS with a standard screw and with a standard tape die was used. The heating zones were heated to 190°/210°C/230°C/230°C and the extruder was run at 100 rpm. 75 wt.-% of polymer G and 25 wt.-% of the obtained powder were continuously fed in the extruder by a gravimetric dosage system. 10 g of extruded tape were then compression moulded between two chromed steel plates at 190°C. The obtained film was optically inspected under a binocular magnifier with magnification of 50. A very good dispersion was rated with mark 6 and a very low dispersion is rated with mark 1 (see Table 11).

**Table 11: Compositions and properties of prepared compacted materials CM14 to CM16 (wt.-% is based on total weight of the compacted material).**

| | CM14 | CM15 | CM16 (comparative) |
|---|---|---|---|
| CC1 [wt.-%] | 90 | 89 | - |
| CC3 [wt.-%] | - | - | 89 |
| Binder B [wt.-%] | 8 | 8.8 | 8.8 |
| Binder C [wt.-%] | 2 | 2.2 | 2.2 |
| Ash content [wt.-%] | 89.7 | 87.5 | 87.9 |
| Mark^{a)} | 2 | 6 | 2 |

| | | | |
|---|---|---|---|
| a) Mark regarding degree of dispersability . | | | |

As can be seen by comparison of CM14 and CM15 at an approximately equal ash content, the dispersability of the material according to the invention is much better. Moreover, CM14 shows that a higher filler load is possible for the compacted material according to the invention. If CC3 was used as filler, it was not possible to obtain a higher filler load than for CM16.

## Claims

1. A process for producing a compacted material comprising the following steps:
a) providing at least one powder material,
b) providing a polymer binder,
c) simultaneously or subsequently feeding the at least one powder material of step a) and the polymer binder of step b) into a high speed mixer unit,
d) mixing the at least one powder material of step a) and the polymer binder of step b) in the high speed mixer unit until formation of a compacted material, and
e) reducing the temperature of the compacted material obtained from step d) below the melting point or glass transition temperature of the polymer binder,
wherein the at least one powder material comprises a surface-treated filler material product comprising a calcium carbonate-comprising filler material and a treatment layer on at least a part of the surface of the calcium carbonate-comprising filler material,
wherein the treatment layer comprises
i) at least one mono-substituted succinic anhydride and/or at least one mono-substituted succinic acid and/or salty reaction products thereof, and/or
ii) a phosphoric acid ester or blend of one or more phosphoric acid mono-ester and salty reaction products thereof and/or one or more phosphoric acid di-ester and salty reaction products thereof.

2. The process of claim 1, wherein the calcium carbonate-comprising filler material is natural ground calcium carbonate, precipitated calcium carbonate, surface-modified calcium carbonate, or a mixture thereof, and preferably natural ground calcium carbonate.

3. The process of any one of the previous claims, wherein the calcium carbonate-comprising filler material has a weight median particle size *d*₅₀ from 0.05 to 10 µm, preferably from 0.1 to 7 µm, more preferably from 0.25 to 5 µm, and most preferably from 0.5 to 4 µm.

4. The process of any one of the previous claims, wherein the at least one mono-substituted succinic anhydride consists of succinic anhydride mono-substituted with a group selected from a linear, branched, aliphatic and cyclic group having a total amount of carbon atoms from C2 to C30, preferably from C3 to C25, and most preferably from C4 to C20 in the substituent.

5. The process of any one of the previous claims, wherein
I) the one or more phosphoric acid mono-ester consists of an o-phosphoric acid molecule mono-esterified with one alcohol molecule selected from unsaturated or saturated, branched or linear, aliphatic or aromatic alcohols having a total amount of carbon atoms from C6 to C30, preferably from C8 to C22, more preferably from C8 to C20, and most preferably from C8 to C18 in the alcohol substituent, and/or
II) the one or more phosphoric acid di-ester consists of an o-phosphoric acid molecule di-esterified with two alcohol molecules selected from the same or different, unsaturated or saturated, branched or linear, aliphatic or aromatic fatty alcohols having a total amount of carbon atoms from C6 to C30, preferably from C8 to C22, more preferably from C8 to C20, and most preferably from C8 to C18 in the alcohol substituent.

6. The process of any one of the previous claims, wherein the surface-treated filler material product comprises the treatment layer in an amount of at least 0.1 wt.-%, based on the total dry weight of the at least one calcium carbonate-comprising filler material, preferably in an amount from 0.1 to 3 wt.-%.

7. The process of any one of the previous claims, wherein the at least one powder material is added in an amount from 50 to 99 wt.-%, based on the total weight of the compacted material, preferably from 60 to 98 wt.-%, more preferably from 80 to 92 wt.-%, and most preferably from 87 to 90 wt.-%.

8. The process of any one of the previous claims, wherein the polymer binder has a rotational viscosity from 100 to 400 000 mPa·s, preferably from 1 000 to 100 000 mPa·s, and more preferably from 5 000 to 50 000 mPa·s, at 190°C.

9. The process of any one of the previous claims, wherein the polymer binder is selected from the group consisting of polyolefins, ethylene copolymers, e.g. ethylene-1-octene copolymers, metallocene based polypropylenes, polypropylene homo- or co-polymers, preferably amorphous polypropylene homopolymers, and combinations thereof.

10. Compacted material obtained by a process according to any one of claims 1 to 9.

11. Use of a compacted material according to claim 10 as additive in a polymer composition.

## Patentansprüche

1. Verfahren zur Herstellung eines verdichteten Materials, umfassend die folgenden Schritte:
a) Bereitstellen von wenigstens einem Pulvermaterial,
b) Bereitstellen von einem Polymerbindemittel,
c) Gleichzeitiges oder anschliessendes Zuführen des wenigstens einen Pulvermaterials von Schritt a) und des Polymerbindemittels von Schritt b) in eine Hochgeschwindigkeitsmischeinheit,
d) Vermischen des wenigstens Pulvermaterials von Schritt a) und des Polymerbindemittels von Schritt b) in der Hochgeschwindigkeitsmischeinheit bis zur Bildung eines verdichteten Materials, sowie
e) Verringern der Temperatur des in Schritt d) erhaltenen verdichteten Materials unter den Schmelzpunkt oder die Glasübergangstemperatur des Polymerbindemittels,
wobei das wenigstens eine Pulvermaterial ein oberflächenbehandeltes Füllstoffmaterialprodukt umfasst, das ein Calciumcarbonat umfassendes Füllstoffmaterial sowie eine Behandlungsschicht auf wenigstens einem der Oberfläche des Calciumcarbonat umfassenden Füllstoffmaterials umfasst, wobei die Behandlungsschicht umfasst
i) wenigstens ein monosubstituiertes Bernsteinsäureanhydrid und/oder wenigstens eine monosubstituierte Bernsteinsäure und/oder Salzreaktionsprodukte davon, und/oder
ii) einen Phosphorsäureester oder einen Blend von einem oder mehreren Phosphorsäuremonoestern sowie Salzreaktionsprodukten davon und/oder einem oder mehreren Phosphorsäurediestern sowie Salzreaktionsprodukten davon.

2. Verfahren nach Anspruch 1, bei dem das Calciumcarbonat umfassende Füllstoffmaterial natürliches, vermahlenes Calciumcarbonat, gefälltes Calciumcarbonat, oberflächenmodifiziertes Calciumcarbonat, oder ein Gemisch davon ist, und bevorzugt natürliches, vermahlenes Calciumcarbonat.

3. Verfahren nach einem der vorhergehenden Ansprüche, bei dem das Calciumcarbonat umfassende Füllstoffmaterial eine gewichtsgemittelte Partikelgrösse *d*₅₀ von 0,05 bis 10 µm aufweist, bevorzugt von 0,1 bis 7 µm, bevorzugter von 0,25 bis 5 µm, und am meisten bevorzugt von 0,5 bis 4 µm.

4. Verfahren nach einem der vorhergehenden Ansprüche, bei dem das wenigstens eine monosubstituierte Bernsteinsäureanhydrid besteht aus Bernsteinsäureanhydrid monosubstituiert mit einer Gruppe ausgewählt aus einer linearen, verzweigten, aliphatischen und cyclischen Gruppe mit einer Gesamtanzahl an Kohlenstoffatomen von C2 bis C30, bevorzugt von C3 bis C25, und am meisten bevorzugt von C4 bis C20 im Substituenten.

5. Verfahren nach einem der vorhergehenden Ansprüche, bei dem
I) der eine oder die mehreren Phosphorsäuremonoester besteht bzw. bestehen aus einem o-Phosphorsäuremolekül monoverestert mit einem Alkoholmolekül ausgewählt aus ungesättigten oder gesättigten, verzweigten oder linearen, aliphatischen oder aromatischen Alkoholen mit einer Gesamtanzahl an Kohlenstoffatomen von C6 bis C30, bevorzugt von C8 bis C22, bevorzugter von C8 bis C20, und am meisten bevorzugt von C8 bis C18 im Alkoholsubstituenten, und/oder
II) der eine oder die mehreren Phosphorsäurediester besteht bzw. bestehen aus einem o-Phosphorsäuremolekül diverestert mit zwei Alkoholmolekülen ausgewählt aus, denselben oder verschiedenen, ungesättigten oder gesättigten, verzweigten oder linearen, aliphatischen oder aromatischen Fettsäurealkoholen mit einer Gesamtanzahl an Kohlenstoffatomen von C6 bis C30, bevorzugt von C8 bis C22, bevorzugter von C8 bis C20, und am meisten bevorzugt von C8 bis C18 im Alkoholsubstituenten.

6. Verfahren nach einem der vorhergehenden Ansprüche, bei dem das oberflächenbehandelte Füllstoffinaterialprodukt die Behandlungsschicht in einer Menge von wenigstens 0,1 Gew.-% umfasst, bezogen auf das Gesamttrockengewicht des wenigstens einen Calciumcarbonat umfassenden Füllstoffmaterials, bevorzugt in einer Menge von 0,1 bis 3 Gew.-%.

7. Verfahren nach einem der vorhergehenden Ansprüche, bei dem das wenigstens eine Pulvermaterial in einer Menge von 50 bis 99 Gew.-% zugegeben wird, bezogen auf das Gesamtgewicht des verdichteten Materials, bevorzugt von 60 bis 98 Gew.-%, bevorzugter von 80 bis 92 Gew.-%, und am meisten bevorzugt von 87 bis 90 Gew.-%.

8. Verfahren nach einem der vorhergehenden Ansprüche, bei dem das Polymerbindemittel eine Rotationsviskosität von 100 bis 400 000 mPa·s aufweist, bevorzugt von 1 000 bis 100 000 mPa·s, und bevorzugter von 5 000 bis 50 000 mPa·s, bei 190°C.

9. Verfahren nach einem der vorhergehenden Ansprüche, bei dem das Polymerbindemittel ausgewählt ist aus der Gruppe bestehend aus Polyolefinen, Ethylen-Copolymeren, z.B. Ethylen-1-octen-Copolymeren, Metallocen basierten Polypropylenen, Polypropylen-Homo-oder - Copolymeren, bevorzugt amorphen Polypropylen-Homopolymeren, sowie Kombinationen davon.

10. Verdichtetes Material, erhalten durch ein Verfahren gemäss einem der Ansprüche 1 bis 9.

11. Verwendung eines verdichteten Materials gemäss Anspruch 10 als Additiv in einer Polyzusammensetzung.

## Revendications

1. Procédé de production d'un matériau compacté comprenant les étapes suivantes consistant à :
a) fournir au moins un matériau pulvérulent,
b) fournir un liant polymère,
c) alimenter simultanément ou subséquemment l'au moins un matériau pulvérulent de l'étape a) et le liant polymère de l'étape b) dans une unité de mélange à grande vitesse,
d) mélanger ledit matériau pulvérulent de l'étape a) et le liant polymère de l'étape b) dans l'unité de mélange à grande vitesse jusqu'à la formation d'un matériau compacté, et
e) réduire la température du matériau compacté obtenu à l'étape d) au-dessous du point de fusion ou de la température de transition vitreuse du liant polymère,
dans lequel l'au moins un matériau pulvérulent comprend un produit de matériau de charge traité en surface comprenant un matériau de charge comprenant du carbonate de calcium et une couche de traitement sur au moins une partie de la surface du matériau de charge comprenant du carbonate de calcium,
dans lequel la couche de traitement comprend
i) au moins un anhydride succinique mono-substitué et/ou au moins un acide succinique mono-substitué et/ou des produits réactionnels sous forme de sels de ceux-ci, et/ou
ii) un ester d'acide phosphorique ou un mélange d'un ou plusieurs mono-esters d'acide phosphorique et de produits réactionnels sous forme de sels de ceux-ci et/ou d'un ou plusieurs di-esters d'acide phosphorique et de produits réactionnels sous forme de sels de ceux-ci.

2. Procédé selon la revendication 1, dans lequel le matériau de charge comprenant du carbonate de calcium est du carbonate de calcium naturel broyé, du carbonate de calcium précipité, du carbonate de calcium modifié en surface ou un mélange de ceux-ci, et de préférence du carbonate de calcium naturel broyé.

3. Procédé selon l'une quelconque des revendications précédentes, dans lequel le matériau de charge comprenant du carbonate de calcium a une granulométrie médiane en poids *d₅₀* de 0.05 à 10 µm, de préférence de 0.1 à 7 µm, plus préférablement de 0.25 à 5 µm et de manière préférée entre toutes de 0.5 à 4 µm.

4. Procédé selon l'une quelconque des revendications précédentes, dans lequel l'au moins un anhydride succinique mono-substitué se compose d'un anhydride succinique mono-substitué avec un groupe choisi parmi les groupes linéaire, ramifié, aliphatique et cyclique ayant une quantité totale d'atomes de carbone de C2 à C30, de préférence de C3 à C25 et de manière préférée entre toutes de C4 à C20 dans le substituant.

5. Procédé selon l'une quelconque des revendications précédentes, dans lequel
I) le ou les mono-esters d'acide phosphorique se composent d'une molécule d'acide o-phosphorique mono-estérifiée avec une molécule d'alcool choisie parmi les alcools insaturés ou saturés, ramifiés ou linéaires, aliphatiques ou aromatiques ayant une quantité totale d'atomes de carbone de C6 à C30, de préférence de C8 à C22, plus préférablement de C8 à C20 et de manière préférée entre toutes de C8 à C18 dans le substituant alcoolique, et/ou
II) le ou les di-esters d'acide phosphorique se composent d'une molécule d'acide o-phosphorique di-estérifiée avec deux molécules d'alcool choisies parmi des alcools gras insaturés ou saturés, ramifiés ou linéaires, aliphatiques ou aromatiques identiques ou différents ayant une quantité totale d'atomes de carbone de C6 à C30, de préférence de C8 à C22, plus préférablement de C8 à C20 et de manière préférée entre toutes de C8 à C18 dans le substituant alcoolique.

6. Procédé selon l'une quelconque des revendications précédentes, dans lequel le produit de matériau de charge traité en surface comprend la couche de traitement en une quantité d'au moins 0.1 % en poids, par rapport au poids sec total de l'au moins un matériau de charge comprenant du carbonate de calcium, de préférence en une quantité de 0.1 à 3 % en poids.

7. Procédé selon l'une quelconque des revendications précédentes, dans lequel l'au moins un matériau pulvérulent est ajouté en une quantité de 50 à 99 % en poids, par rapport au poids total du matériau compacté, de préférence de 60 à 98 % en poids, plus préférablement de 80 à 92 % en poids, et de manière préférée entre toutes de 87 à 90 % en poids.

8. Procédé selon l'une quelconque des revendications précédentes, dans lequel le liant polymère a une viscosité rotationnelle de 100 à 400 000 mPa.s, de préférence de 1 000 à 100 000 mPa.s et plus préférablement de 5 000 à 50 000 mPa.s à 190 °C.

9. Procédé selon l'une quelconque des revendications précédentes, dans lequel le liant polymère est choisi dans le groupe constitué par les polyoléfines, les copolymères d'éthylène, par exemple les copolymères d'éthylène-1-octène, les polypropylènes à base de métallocène, les homo- ou co-polymères de polypropylène, de préférence les homopolymères de polypropylène amorphes et des combinaisons de ceux-ci.

10. Matériau compacté obtenu par un procédé selon l'une quelconque des revendications 1 à 9.

11. Utilisation d'un matériau compacté selon la revendication 10 en tant qu'additif dans une composition polymère.
